# EUROPEAN PATENT APPLICATION

(11) **EP 4 622 145 A1**
(43) Date of publication of application: **24.09.2025**
(21) Application number: 23910110.8
(22) Date of filing: 12.12.2023
(51) Int. Cl.: H04L 1/00

(54) **DATA TRANSMISSION METHOD AND COMMUNICATION APPARATUS**

(30) Priority: 27.12.2022 CN 202211690134
(71) Applicant: Huawei Technologies Co., Ltd., Shenzhen, Guangdong 518129 (CN)
(72) Inventor: CAO, Youlong, Shenzhen, Guangdong 518129 (CN); QIN, Yi, Shenzhen, Guangdong 518129 (CN); CHEN, Erkai, Shenzhen, Guangdong 518129 (CN); XU, Rui, Shenzhen, Guangdong 518129 (CN)
(74) Representative: Gill Jennings & Every LLP
(86) International application number: PCT/CN2023/138232
(87) International publication number: WO 2024/140180

(57) **Abstract**

A data transmission method and a communication apparatus are provided. Transmission of first data (for example, video data) is performed on a part of time-frequency resources on one layer of space division resources (a first space division resource), and transmission of second data (for example, haptic data) is performed on the other part of time-frequency resources on the layer of space division resources, or transmission of the second data is performed on another layer of space division resources (a second space division resource). Two sets of different MCSs, NDIs, and RVs are respectively used for transmission of the first data and transmission of the second data, and the first space division resource and the second space division resource correspond to a same time-frequency resource. According to this solution, transmission of two types of data that have different requirements on reliability, a delay, a transmission rate, and the like can be efficiently and simultaneously implemented. This ensures that transmission of data (for example, the haptic data) that has high requirements on the reliability and the delay can be performed as required, and meets a transmission rate requirement of data (for example, the video data) that has a high requirement on the rate, improving communication efficiency.

## Description

This application claims priority to Chinese Patent Application No. 202211690134.1, filed with the China National Intellectual Property Administration on December 27, 2022 and entitled "DATA TRANSMISSION METHOD AND COMMUNICATION APPARATUS", which is incorporated herein by reference in its entirety.

### TECHNICAL FIELD

This application relates to the communication field, and more specifically, to a data transmission method and a communication apparatus.

### BACKGROUND

As a new service, a multi-modal service is added with a user haptic experience dimension on the basis of extended reality (extended reality, XR), for example, uses two different modalities or different types of signals: haptic signals and video signals, to implement remote touch and remote control, and implement remote sensing in a plurality of aspects such as vision, hearing, haptic sensation, and kinesthesis. The multi-modal service has great development space in related fields such as industrial automation, healthcare, and distance education, provides users with comprehensive interactive experience, and has great application value and business potential.

For example, for the two different types (or different modalities) of signals: the haptic signals and the video signals, because encoding and decoding principles of the haptic signals and the video signals are different, data packets of the haptic signals and the video signals have different traffic features in transmission over a network. For example, transmission delay requirements and transmission reliability requirements of the two types of signals are different. However, in a current technology, video data and haptic data cannot be efficiently and simultaneously scheduled. This cannot ensure high requirements of the haptic data on reliability and a delay, and cannot meet a high requirement of the video data on a rate, affecting communication efficiency, and deteriorating user experience.

### SUMMARY

This application provides a data transmission method and a communication apparatus, to efficiently and simultaneously implement transmission of two types of data (for example, video data and haptic data) that have different requirements on reliability, a delay, a transmission rate, and the like. This ensures that transmission of data (for example, the haptic data) that has a high requirement on the reliability and the delay can be performed as required. In addition, a transmission rate requirement of data (for example, the video data) that has a high requirement on the rate is also met. In this way, communication efficiency is improved.

According to a first aspect, a data transmission method is provided. The method may be performed by a terminal device, or may be performed by a chip, a chip system, a processor, or the like that supports the terminal device in implementing the method. The method includes: receiving first data on a first time-frequency resource of a first space division resource based on a first transmission parameter; and receiving second data on a second time-frequency resource of the first space division resource based on a second transmission parameter, or skipping receiving data on the second time-frequency resource of the first space division resource, where the first time-frequency resource and the second time-frequency resource do not overlap, the first transmission parameter includes a first modulation and coding scheme MCS, a first redundancy version RV, and a first new data indicator NDI, and the second transmission parameter includes a second MCS, a second RV, and a second NDI.

According to the data transmission method provided in the first aspect, the first data (the first data may be, for example, video data) is received on a part of time-frequency resources on one layer of space division resources (for example, the first space division resource), and the second data (the second data may be, for example, haptic data) is received on the other part of time-frequency resources on the layer of space division resources, or the second data is received on another layer of space division resources (for example, a second space division resource). Two sets of different MCSs, NDIs, and RVs are respectively used for transmission of the first data and transmission of the second data, and the first space division resource and the second space division resource correspond to a same time-frequency resource. According to this solution, transmission of two types of data (for example, the video data and the haptic data) that have different requirements on reliability, a delay, a transmission rate, and the like can be efficiently and simultaneously implemented. This ensures that transmission of data (for example, the haptic data) that has a high requirement on the reliability and the delay can be performed as required. In addition, a transmission rate requirement of data (for example, the video data) that has a high requirement on the rate is also met. In this way, communication efficiency is improved.

For example, the first time-frequency resource and the second time-frequency resource may not overlap in time domain, but overlap in frequency domain.

For example, the first time-frequency resource and the second time-frequency resource may not overlap in frequency domain, but overlap in time domain.

For example, the first time-frequency resource and the second time-frequency resource may not overlap in frequency domain or time domain.

For example, the first data and the second data are data of different modalities or different types. For example, data amounts of the first data and the second data are different, and transmission delay requirements, reliability, and the like may also be different. For example, the first data may be haptic data, and the second data is visual data. Alternatively, the first data may be visual data, and the second data is haptic data.

For example, the first space division resource may be understood as a layer (layer) of spatial multiplexing resources, or a layer (layer) of resources for spatial multiplexing. In other words, the first space division resource may be understood as one layer of space division resources (or one space division resource).

In a possible implementation of the first aspect, the first space division resource is each of M space division resources, and M is a positive integer.

For example, a value of M is less than or equal to 4. When a total quantity of layers of spatial multiplexing resources is less than or equal to 4, in other words, a total quantity of space division resources is less than or equal to 4, the first space division resource may be each layer of space division resources (or each space division resource) in space division resources at or below the fourth layer. In this case, the terminal device may receive the first data on a first time-frequency resource of each layer of space division resources based on (which may also be referred to as using) the first transmission parameter, and receive the second data on a second time-frequency resource of each layer of space division resources based on the second transmission parameter.

In a possible implementation of the first aspect, the first space division resource is L space division resources in M space division resources, M is a positive integer greater than 1, and L is a positive integer less than M.

For example, a value of M may be a positive integer greater than 4. To be specific, when a total quantity of layers of spatial multiplexing resources is greater than 4, in other words, a total quantity of space division resources is greater than 4, the first space division resource may be the L space division resources in the M space division resources. A same transmission parameter (for example, the first transmission parameter) is used for the L first space division resources, and a same transmission parameter (for example, the second transmission parameter) is used for remaining M-L space division resources (each of the remaining M-L space division resources is the second space division resource). In this case, the terminal device may receive the first data on a first time-frequency resource of each first space division resource based on the first transmission parameter. In addition, the terminal device may receive the second data on the second space division resource by using the second transmission parameter.

In a possible implementation of the first aspect, the method further includes: receiving first configuration information and receiving first indication information, where the first indication information indicates a third time-frequency resource on the first space division resource, and the first configuration information is used to configure the first time-frequency resource and the second time-frequency resource in the third time-frequency resource. In this implementation, the first configuration information and the first indication information are received, so that the terminal device determines specific locations of the first time-frequency resource and the second time-frequency resource in the third time-frequency resource based on the first configuration information and the first indication information, and the terminal device accurately learns of the specific locations of the first time-frequency resource and the second time-frequency resource, to ensure that the terminal device can receive different data on the first time-frequency resource and the second time-frequency resource, ensure that transmission of data can be successfully performed, and improve a data transmission success rate.

In a possible implementation of the first aspect, the first configuration information may be RRC, and the first indication information may be DCI. In this implementation, the first configuration information is implemented by using the RRC, and the first indication information is implemented by using the DCI. In this way, no additional signaling overheads need to be increased, in other words, communication resources can be saved, communication resource utilization can be improved, and efficiency of receiving the first configuration information and the first indication information can be ensured.

In a possible implementation of the first aspect, the first configuration information is used to configure at least one of the following: a proportion of the first time-frequency resource in the third time-frequency resource; or a proportion of the second time-frequency resource in the third time-frequency resource. In this implementation, the terminal device can clearly learn of specific locations of the first time-frequency resource and the second time-frequency resource, so that efficiency and accuracy of determining the first time-frequency resource and the second time-frequency resource are improved.

For example, when a total quantity of layers of spatial multiplexing resources is less than or equal to 4, or when the total quantity of layers of spatial multiplexing resources is greater than 4, indication information may be added to RRC, to indicate to obtain a part (as the first time-frequency resource), through division in ascending order (or in descending order) of frequencies (in other words, based on frequency domain), from a time-frequency resource (the third time-frequency resource) allocated by using DCI, and a remaining part is the second time-frequency resource; or a part is obtained through division as the second time-frequency resource, and a remaining part is the first time-frequency resource.

For another example, indication information may be added to RRC, to indicate to obtain a part (as the first time-frequency resource), through division in ascending order (or in descending order) of time (in other words, based on time domain), from a time-frequency resource (the third time-frequency resource) allocated by using DCI, and a remaining part is the second time-frequency resource; or a part is obtained through division as the second time-frequency resource, and a remaining part is the first time-frequency resource.

For example, a frequency domain division indication (FrequencyDomianDivision) field and/or a time domain division indication (TimeDomianDivision) field may be added to the RRC signaling, and each field indicates whether a division function is valid and a division size.

In a possible implementation of the first aspect, the method further includes: receiving second indication information, where the second indication information indicates the first time-frequency resource and the second time-frequency resource. In this implementation, the terminal device can clearly learn of specific locations of the first time-frequency resource and the second time-frequency resource, so that efficiency and accuracy of determining the first time-frequency resource and the second time-frequency resource are improved.

For example, the second indication information may be DCI. In this implementation, and the second indication information is implemented by using the DCI. In this way, no additional signaling overheads need to be increased, in other words, communication resources can be saved, communication resource utilization can be improved, and efficiency of receiving the second indication information can be ensured.

In a possible implementation of the first aspect, when the total quantity of layers of spatial multiplexing resources is less than or equal to 4, the second indication information includes a second MCS field, a first part of the second MCS field indicates the second MCS, and a second part of the second MCS field indicates the first time-frequency resource and the second time-frequency resource. In this implementation, the second MCS field indicates the first time-frequency resource and the second time-frequency resource, no additional field needs to be added to the DCI to indicate the first time-frequency resource and the second time-frequency resource, and only a manner of interpreting some resources in the DCI needs to be changed. In this way, a change to signaling is small, and communication resource utilization is improved.

For example, the first part (for example, the first two bits of the second MCS field) of the second MCS field indicates an offset value (ΔMCS) between an index value of the second MCS and an index value of the first MCS. The second part of the second MCS field is the last three bits of the second MCS field. Different bit values may represent different division proportions or division forms of the third time-frequency resource.

In a possible implementation of the first aspect, when the total quantity of layers of spatial multiplexing resources is less than or equal to 4, the second indication information includes a second MCS field and a second RV field, a first part of the second MCS field indicates the second MCS, a second part of the second MCS field and a first part of the second RV field indicate the first time-frequency resource and the second time-frequency resource, and a second part of the second RV field indicates the second RV. In this implementation, the MCS field and the second RV field indicate that a time-frequency resource that is allocated by using the DCI and that is used for transmission of a TB 1 is divided into the first time-frequency resource and the second time-frequency resource, no additional field needs to be added to the DCI to indicate the first time-frequency resource and the second time-frequency resource, and only a manner of interpreting some resources in the DCI needs to be changed. In this way, a change to signaling is small, communication resources can be saved, and communication resource utilization can be improved.

For example, 1 bit of the second RV field and the second part (for example, the last three bits of the second MCS field) of the second MCS field jointly indicate the first time-frequency resource and the second time-frequency resource. The first part (for example, the first two bits of the second MCS field) of the second MCS field indicates an offset value (ΔMCS) between an index value of the second MCS and an index value of the first MCS, and another bit of the second RV field indicates the second RV.

According to a second aspect, a data transmission method is provided. The method may be performed by a network device, may be performed by a chip, a chip system, or a processor that supports the network device in implementing the method, or may be performed by a logical node, a logical module, software, or the like that can implement all or some functions of the network device. The method includes: sending first data on a first time-frequency resource of a first space division resource based on a first transmission parameter; and sending second data on a second time-frequency resource of the first space division resource based on a second transmission parameter, or skipping sending data on the second time-frequency resource of the first space division resource, where the first time-frequency resource and the second time-frequency resource do not overlap, the first transmission parameter includes a first modulation and coding scheme MCS, a first redundancy version RV, and a first new data indicator NDI, and the second transmission parameter includes a second MCS, a second RV, and a second NDI.

According to the data transmission method provided in the second aspect, the first data (which may be, for example, video data) is sent on a part of time-frequency resources (the first time-frequency resource) on one layer of space division resources (for example, the first space division resource), and the second data (which may be, for example, haptic data) is sent on the other part of time-frequency resources (the second time-frequency resource) on the layer of space division resources, or the second data is sent on another layer of space division resources (for example, the second space division resource). Two sets of different MCSs, NDIs, and RVs are respectively used for sending the first data and the second data, and the first space division resource and the second space division resource correspond to a same time-frequency resource. According to this solution, transmission of two types of data (for example, the video data and the haptic data) that have different requirements on reliability, a delay, a transmission rate, and the like can be efficiently and simultaneously implemented. This ensures that transmission of data (for example, the haptic data) that has a high requirement on the reliability and the delay can be performed as required. In addition, a transmission rate requirement of data (for example, the video data) that has a high requirement on the rate is also met. In this way, communication efficiency is improved.

In a possible implementation of the second aspect, the first space division resource is each of M space division resources, and M is a positive integer.

For example, a value of M is less than or equal to 4. When a total quantity of layers of spatial multiplexing resources is less than or equal to 4, in other words, a total quantity of space division resources is less than or equal to 4, the first space division resource may be each layer of space division resources (or each space division resource) in space division resources at or below the fourth layer. In this case, the network device may send the first data on a first time-frequency resource of each layer of space division resources based on (which may also be referred to as using) the first transmission parameter, and send the second data on a second time-frequency resource of each layer of space division resources based on the second transmission parameter.

In a possible implementation of the second aspect, the first space division resource is L space division resources in M space division resources, M is a positive integer greater than 1, and L is a positive integer less than M.

For example, a value of M may be a positive integer greater than 4. To be specific, when a total quantity of layers of spatial multiplexing resources is greater than 4, in other words, a total quantity of space division resources is greater than 4, the first space division resource may be the L space division resources in the M space division resources. A same transmission parameter (for example, the first transmission parameter) is used for the L first space division resources, and a same transmission parameter (for example, the second transmission parameter) is used for remaining M-L space division resources (each of the remaining M-L space division resources is the second space division resource). In this case, the network device may send the first data on a first time-frequency resource of each first space division resource based on the first transmission parameter. In addition, the network device may send the second data on a second space division resource by using the second transmission parameter.

In a possible implementation of the second aspect, the method further includes: sending first configuration information and sending first indication information, where the first indication information indicates a third time-frequency resource on the first space division resource, and the first configuration information is used to configure the first time-frequency resource and the second time-frequency resource in the third time-frequency resource. In this implementation, the first configuration information and the first indication information are sent to a terminal device, so that the terminal device determines specific locations of the first time-frequency resource and the second time-frequency resource in the third time-frequency resource based on the first configuration information and the first indication information, and the terminal device accurately learns of the specific locations of the first time-frequency resource and the second time-frequency resource, to ensure that the terminal device can receive different data on the first time-frequency resource and the second time-frequency resource, ensure that transmission of data can be successfully performed, and improve a data transmission success rate.

In a possible implementation of the second aspect, the first configuration information may be RRC, and the first indication information may be DCI. In this implementation, the first configuration information is implemented by using the RRC, and the first indication information is implemented by using the DCI. In this way, no additional signaling overheads need to be increased, in other words, communication resources can be saved, communication resource utilization can be improved, and efficiency of receiving the first configuration information and the first indication information can be ensured.

In a possible implementation of the second aspect, the first configuration information is used to configure at least one of the following: a proportion of the first time-frequency resource in the third time-frequency resource; or a proportion of the second time-frequency resource in the third time-frequency resource. In this implementation, the terminal device can clearly learn of specific locations of the first time-frequency resource and the second time-frequency resource, so that efficiency and accuracy of determining the first time-frequency resource and the second time-frequency resource are improved.

For example, a frequency domain division indication (FrequencyDomianDivision) field and/or a time domain division indication (TimeDomianDivision) field may be added to the RRC signaling, and each field indicates whether a division function is valid and a division size.

In a possible implementation of the second aspect, the method further includes: sending second indication information, where the second indication information indicates the first time-frequency resource and the second time-frequency resource. In this implementation, the terminal device can clearly learn of specific locations of the first time-frequency resource and the second time-frequency resource, so that efficiency and accuracy of determining the first time-frequency resource and the second time-frequency resource are improved.

For example, the second indication information may be DCI. In this implementation, and the second indication information is implemented by using the DCI. In this way, no additional signaling overheads need to be increased, in other words, communication resources can be saved, communication resource utilization can be improved, and efficiency of receiving the second indication information can be ensured.

In a possible implementation of the second aspect, when the total quantity of layers of spatial multiplexing resources is less than or equal to 4, the second indication information includes a second MCS field, a first part of the second MCS field indicates the second MCS, and a second part of the second MCS field indicates the first time-frequency resource and the second time-frequency resource. In this implementation, the second MCS field indicates the first time-frequency resource and the second time-frequency resource, no additional field needs to be added to the DCI to indicate the first time-frequency resource and the second time-frequency resource, and only a manner of interpreting some resources in the DCI needs to be changed. In this way, a change to signaling is small, and communication resource utilization is improved.

In a possible implementation of the second aspect, when the total quantity of layers of spatial multiplexing resources is less than or equal to 4, the second indication information includes a second MCS field and a second RV field, a first part of the second MCS field indicates the second MCS, a second part of the second MCS field and a first part of the second RV field indicate the first time-frequency resource and the second time-frequency resource, and a second part of the second RV field indicates the second RV. In this implementation, the MCS field and the second RV field indicate that a time-frequency resource that is allocated by using the DCI and that is used for transmission of a TB 1 is divided into the first time-frequency resource and the second time-frequency resource, no additional field needs to be added to the DCI to indicate the first time-frequency resource and the second time-frequency resource, and only a manner of interpreting some resources in the DCI needs to be changed. In this way, a change to signaling is small, communication resources can be saved, and communication resource utilization can be improved.

According to a third aspect, a communication apparatus is provided. The apparatus includes modules (for example, including a processing module and an interface module) configured to perform the steps in any one of the first aspect or the possible implementations of the first aspect. The apparatus may be a terminal device, or may be a chip, a chip system, a processor, or the like in the terminal device.

According to a fourth aspect, a communication apparatus is provided. The apparatus includes modules (for example, including a processing module and an interface module) configured to perform the steps in any one of the second aspect or the possible implementations of the second aspect. The apparatus may be a network device, may be a chip, a chip system, a processor, or the like in the network device, or may be a logical node, a logical module, software, or the like that can implement all or some functions of the network device.

According to a fifth aspect, a communication apparatus is provided. The apparatus includes at least one processor and a memory, and the at least one processor is configured to perform the method in any one of the first aspect or the possible implementations of the first aspect. The apparatus may be a terminal device, or may be a chip, a chip system, a processor, or the like in the terminal device.

According to a sixth aspect, a communication apparatus is provided. The apparatus includes at least one processor and a memory, and the at least one processor is configured to perform the method in any one of the second aspect or the possible implementations of the second aspect. The apparatus may be a network device, may be a chip, a chip system, a processor, or the like in the network device, or may be a logical node, a logical module, software, or the like that can implement all or some functions of the network device.

According to a seventh aspect, a communication apparatus is provided. The apparatus includes at least one processor and an interface circuit, and the at least one processor is configured to perform the method in any one of the first aspect or the possible implementations of the first aspect. The apparatus may be a terminal device, or may be a chip, a chip system, a processor, or the like in the terminal device.

According to an eighth aspect, a communication apparatus is provided. The apparatus includes at least one processor and an interface circuit, and the at least one processor is configured to perform the method in any one of the second aspect or the possible implementations of the second aspect. The apparatus may be a network device, may be a chip, a chip system, a processor, or the like in the network device, or may be a logical node, a logical module, software, or the like that can implement all or some functions of the network device.

According to a ninth aspect, a terminal device is provided. The terminal device includes the communication apparatus provided in the third aspect, the terminal device includes the communication apparatus provided in the fifth aspect, or the terminal device includes the communication apparatus provided in the seventh aspect.

According to a tenth aspect, a network device is provided. The network device includes the communication apparatus provided in the fourth aspect, the network device includes the communication apparatus provided in the sixth aspect, or the network device includes the communication apparatus provided in the eighth aspect.

According to an eleventh aspect, a computer program product is provided. The computer program product includes a computer program. When executed by a processor, the computer program is configured to perform the method in any one of the first aspect or the possible implementations of the first aspect, or the method in any one of the second aspect or the possible implementations of the second aspect.

According to a twelfth aspect, a computer-readable storage medium is provided. The computer-readable storage medium stores a computer program. When executed, the computer program is configured to perform the method in any one of the first aspect or the possible implementations of the first aspect, or the method in any one of the second aspect or the possible implementations of the second aspect.

According to a thirteenth aspect, a communication system is provided. The communication system includes the foregoing terminal device and the foregoing network device.

According to a fourteenth aspect, a chip is provided. The chip includes a processor configured to invoke a computer program from a memory and run the computer program, so that a communication device on which the chip is mounted performs the method in any one of the first aspect or the possible implementations of the first aspect, or the method in any one of the second aspect or the possible implementations of the second aspect.

### BRIEF DESCRIPTION OF DRAWINGS

FIG. 1 is a diagram of features of service arrival of one channel of encoded haptic signal and a video signal;
FIG. 2 is a diagram of statistics collection on quantities of slots in which no haptic signal arrives in a video PDB;
FIG. 3 is a diagram in which a haptic signal occupies a sending opportunity of a video signal;
FIG. 4 is a diagram of an example of a communication system applicable to a data transmission method in embodiments of this application according to this application;
FIG. 5 is a schematic interaction flowchart of an example of a data transmission method according to this application;
FIG. 6 is a diagram of an example in which a first time-frequency resource and a second time-frequency resource do not overlap in time domain, but overlap in frequency domain according to this application;
FIG. 7 is a diagram of an example in which a first time-frequency resource and a second time-frequency resource do not overlap in frequency domain, but overlap in time domain according to this application;
FIG. 8 is a diagram of an example in which a first time-frequency resource and a second time-frequency resource do not overlap in frequency domain or time domain according to this application;
FIG. 9 is a schematic interaction flowchart of another example of a data transmission method according to this application;
FIG. 10 is a diagram of an example in which a third time-frequency resource indicated (allocated) by using DCI is divided into a first time-frequency resource and a second time-frequency resource in frequency domain according to this application;
FIG. 11 is a diagram of an example in which a third time-frequency resource on a first space division resource (namely, each layer of the first four layers of space division resources) that is indicated by using DCI and that is used for transmission of a TB 1 is divided into a first time-frequency resource and a second time-frequency resource in frequency domain when a quantity of layers (layers) of spatial multiplexing resources is 8 according to this application.
FIG. 12 is a diagram of an example in which, in a second MCS field, a first part of the second MCS field indicates a second MCS, and a second part of the second MCS field indicates a first time-frequency resource and a second time-frequency resource according to this application;
FIG. 13 is a diagram of an example in which a second part of a second MCS field and a first part of a second RV field indicate a first time-frequency resource and a second time-frequency resource according to this application;
FIG. 14 is a block diagram of an example of a communication apparatus according to an embodiment of this application;
FIG. 15 is a block diagram of another example of a communication apparatus according to an embodiment of this application;
FIG. 16 is a block diagram of an example of a communication apparatus according to an embodiment of this application;
FIG. 17 is a block diagram of another example of a communication apparatus according to an embodiment of this application; and
FIG. 18 is a block diagram of a terminal device according to an embodiment of this application.

### DESCRIPTION OF EMBODIMENTS

The following describes the technical solutions of this application with reference to the accompanying drawings.

In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The terms "first" and "second" mentioned below are only intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In embodiments of this application, a terminal device or a network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel and various other media that can store, include and/or carry instructions and/or data.

In recent years, with continuous progress and improvement of an extended reality (extended reality, XR) technology, a related industry has developed vigorously. Nowadays, the extended reality technology has entered various fields closely related to production and life of people, for example, education, entertainment, military affairs, medical care, environmental protection, transportation, and public health.

Extended reality is a general term of various reality-related technologies. For example, the extended reality may include virtual reality (virtual reality, VR), augmented reality (augmented reality, AR), mixed reality (mixed reality, MR), and the like. A virtual reality technology mainly means rendering visual and audio scenarios to simulate sensory stimulation of vision and audio in a real world to a user as much as possible. In the virtual reality technology, the user usually needs to wear a virtual reality device like a head mounted display (Head Mounted Display, HMD) or VR glasses, to completely replace a field of view of the user with a simulated visual component. In addition, a headset needs to be worn by the user to provide accompanying audio for the user. In addition, in the VR, head and action tracking usually needs to be performed on the user, to update simulated visual and audio content in a timely manner, so that the visual and audio content experienced by the user is consistent with an action of the user. An augmented reality technology mainly means providing visual or auditory additional information or manually generated content in a real environment perceived by the user. The user may directly perceive the real environment, to be specific, there is no sensing, processing, or rendering of an intermediate device (for example, a related sensor); or may indirectly perceive the real environment, to be specific, transfer is performed by using a sensor or the like, and further enhancement processing is performed. A mixed reality technology is an advanced form of the AR. One of implementations of the mixed reality technology is to insert some virtual elements into a physical scenario, to provide the user with an immersive experience in which the elements are a part of the real scenario.

As a new service, a multi-modal service is added with a user haptic experience dimension on the basis of the XR. For example, two different modalities or different types of signals: haptic signals and video signals are used, to implement remote touch and remote control, and implement remote sensing in a plurality of aspects such as vision, hearing, haptic sensation, and kinesthesis. The multi-modal service has great development space in related fields such as industrial automation, healthcare, and distance education, provides users with comprehensive interactive experience, and has great application value and business potential.

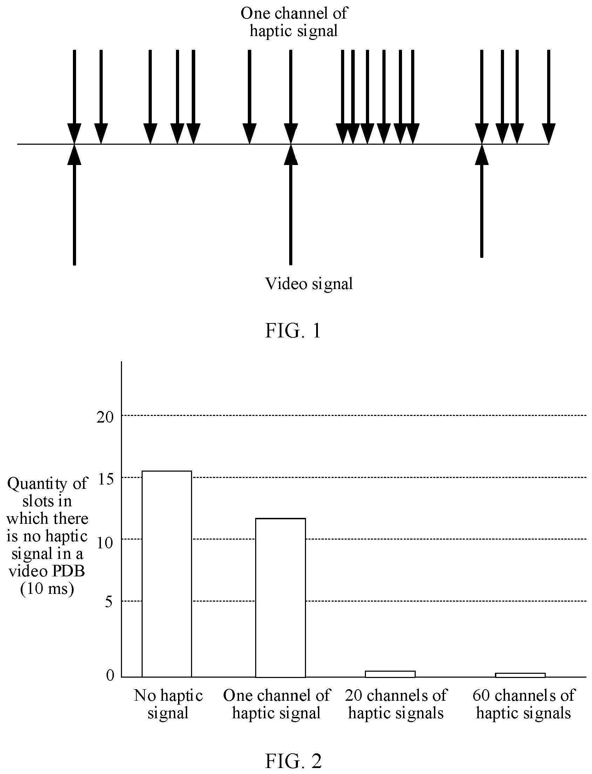

For example, for the two different types (or different modalities) of signals: the haptic signals and the video signals, because encoding and decoding principles of the haptic signals and the video signals are different, data packets of the haptic signals and the video signals have different traffic features in transmission over a network. For example, FIG. 1 is a diagram of features of service arrival of one channel of encoded haptic signal and a video signal. A haptic (haptic) signal has different service features before and after encoding. Before the haptic signal is encoded, a signal generated by each channel of haptic sensor is periodic, approximately 500 to 2000 packets are generated per second, and a size of each packet is 12 to 48 bytes. After haptic encoding, as shown in FIG. 1, a signal generated by each channel of haptic sensor randomly arrives, a time interval between two arrivals complies with a generalized Pareto distribution, and a size of a packet that arrives each time remains unchanged. It should be noted that, although the packet size of the haptic signal generated by each channel of (each) haptic sensor remains unchanged after encoding, in consideration of a case in which one user uses a plurality of (a plurality of channels of) haptic sensors simultaneously, because signal generation of each channel of sensor is independent, data of each user arrives at the network in an uneven manner. However, a service model of an XR-type video transmission service (namely, transmission of a video signal) usually means arriving periodically based on a frame rate. For example, as shown in FIG. 1, for a video whose frame rate is 60 frames per second (Frame Per Second, FPS), one image frame ideally arrives every 16.67 milliseconds. In addition, a size of an XR video frame is also much larger than that of a haptic data packet. For example, for a video of 30 Mbps@60 FPS, a size of a single video frame is 60 to 100 Kbytes.

Due to a difference in human body perception of the haptic signal and the video signal, the two different modalities of signals have different network transmission requirements. Based on a current standard definition, a reliability requirement of the video signal is 99%, and a delay requirement is 10 ms; and a reliability requirement of the haptic signal is 99.999%, and a delay requirement is 5 ms. Therefore, different reliability assurances need to be used during transmission at a physical layer. For example, in consideration of a case in which a time division duplexing (time division duplexing, TDD) configuration is "DDDDU" (D represents a downlink slot, and U identifies an uplink slot) and a subcarrier spacing is 30 kHz, for the delay requirement of the haptic signal for 5 ms, there is usually only one retransmission opportunity. Therefore, an initial block error rate (initial block error rate, iBLER) at the physical layer may be set to 1%. After one retransmission and accumulation of a combining gain, the transmission reliability requirement for 99.999% can be met. For the delay requirement of the video signal for 10 ms, there may usually be two or three retransmission opportunities. Therefore, an initial block error rate (iBLER) at the physical layer may be set to 10%. Different iBLERs at the physical layer affect a selected modulation and coding scheme (modulation and coding scheme, MCS) in a sending process. Table 1 shows an MCS table defined in a current standard. Generally, a larger value of an iBLER indicates a higher index value of a selected MCS.

**Table 1**

| MCS index (MCS index, I_{MCS}) | Modulation order (Modulation order, Qₘ) | Target code rate (Target code Rate R x [1024]) | Spectral efficiency (Spectral efficiency) |
|---|---|---|---|
| 0 | 2 | 120 | 0.2344 |
| 1 | 2 | 157 | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 438 | 2.5664 |
| 18 | 6 | 466 | 2.7305 |
| 19 | 6 | 517 | 3.0293 |
| 20 | 6 | 567 | 3.3223 |
| 21 | 6 | 616 | 3.6094 |
| 22 | 6 | 666 | 3.9023 |
| 23 | 6 | 719 | 4.2129 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

In a current NR standard, if a value of a "maxNrofCodeWordsScheduledByDCI" field (namely, a field of a maximum quantity of codewords scheduled by using downlink control information (downlink control information, DCI)) in radio resource control (radio resource control, RRC) signaling is 1, one piece of DCI can be used to schedule only one transmission block (transmission block, TB). There are two sets of transmission parameter fields in the DCI. Each set of transmission parameter fields includes one MCS field, one new data indicator (New Data Indicator, NDI) field, and one redundancy version (Redundant Version, RV) field, and indicates one set of transmission parameters. However, only one set of transmission parameter fields is activated or usable. When the value of the "maxNrofCodeWordsScheduledByDCI" field in RRC is 2, one piece of DCI (format 1_1) may be used to schedule a maximum of two TBs. In this case, there are two sets of transmission parameter fields in the DCI, which respectively correspond to configurations of two TBs. The two sets of transmission parameter fields are both activated or usable.

In a current NR system, when a quantity of layers (layers) of spatial multiplexing resources does not exceed 4 in downlink scheduling, one piece of DCI can be used to schedule only one TB, and a same transmission parameter is used for an entire transmission block. For example, the transmission parameter may include an MCS, an NDI, and an RV. Because the video signal and the haptic signal have different reliability requirements, different transmission parameters need to be used for transmission at the physical layer (for example, one set of MCS, NDI, and RV is used for the video signal, and another set of MCS, NDI, and RV is used for the haptic signal). Therefore, there may be the following two transmission methods.
First transmission method: scheduling the haptic signal and the video signal in different slots (slots);
Second transmission method: performing transmission of the video signal together with the haptic signal based on the haptic reliability requirement.

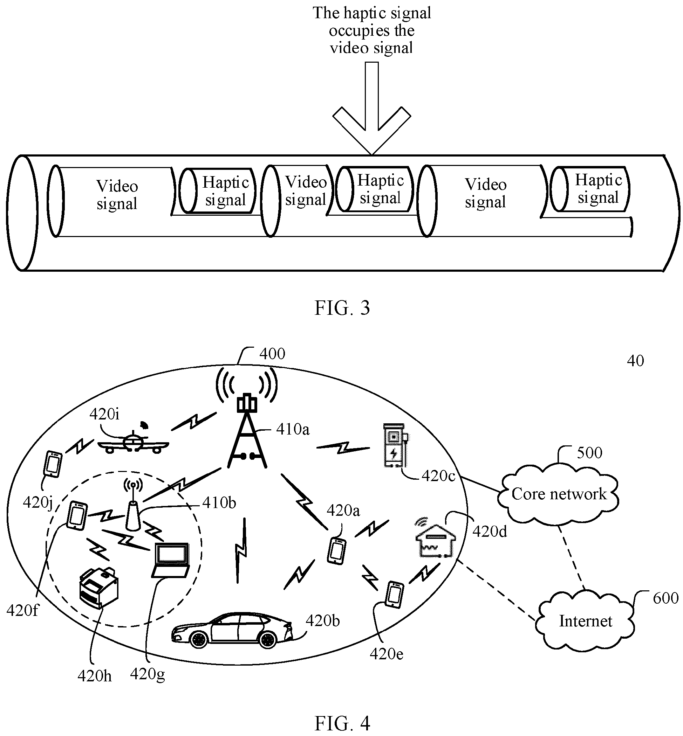

If the first transmission method is used, in consideration of a case in which a TDD slot configuration is "DDDSU", where "S" represents a special slot, and a subcarrier spacing is 30 kHz (in other words, a time length of one slot is 0.5 ms), FIG. 2 shows quantities of slots in which no haptic signal arrives at an air interface within a video data packet delay budget (packet delay budget, PDB) in terms of different quantities of haptic sensors (for example, if the video data packet delay budget is 10 ms, 20 slots need to be used for transmission). In consideration of a downlink scenario (to be specific, a transmit end of the video signal and the haptic signal is a network device, and a receive end is a terminal device), a typical quantity of haptic sensors for a single user is 60, including 40 sensors for a haptic vest and 20 sensors for a pair of haptic gloves. In this case, as shown in FIG. 2, there is an arrival of a haptic signal in almost all slots in the video PDB. Therefore, in the video PDB, as shown in FIG. 3, the haptic signal frequently occupies a sending opportunity of the video signal. Consequently, transmission of the video signal cannot be completed in the specified PDB.

If the second transmission method is used, it is considered that transmission of the video signal is performed together with the haptic signal based on the reliability requirement of the haptic signal (in other words, transmission of the video signal is also performed by using a transmission parameter corresponding to the haptic signal). A capacity of a video service (transmission of a video signal is performed in the video service) is tested based on an iBLER of 10% (physical layer transmission reliability used by most companies in the current standard) and an iBLER of 1% (transmission reliability used when the haptic signal is allowed for one retransmission). Table 2 shows an example of a table of capacity data of the video service after transmission of the video signal is performed together with the haptic signal based on the reliability requirement of the haptic signal.

**Table 2**

| Video service rate | iBLER | Video service capacity | Decrease proportion |
|---|---|---|---|
| 30 Mbps | 10% | 11.5 | 21.1% |
| | 1% | 9.5 | |
| 25 Mbps | 10% | 16.4 | 30.2% |
| | 1% | 12.6 | |

It can be learned from Table 2 that, if transmission of the video signal is performed based on the reliability requirement of the haptic signal, the service capacity of the video is decreased by 20% to 30%.

When a quantity of layers of spatial multiplexing resources exceeds 4 in downlink scheduling, a current system supports scheduling two TBs (for example, a TB 1 and a TB 2) by using one piece of DCI. Each TB has independent MCS, NDI, and RV configurations, but the two TBs occupy a same frequency domain resource and a same time domain resource. In this case, a possible transmission manner of a multi-modal service of the video signal (video data) and the haptic signal (haptic data) is as follows: The TB 1 is used for transmission of the haptic data, and the TB 2 is used for transmission of the video data. Independent MCS, NDI, and RV configurations are used for the two TBs, and the two TBs respectively occupy different space division resources. For example, a total quantity of layers of spatial multiplexing resources is 8, the first four layers carry the TB 1 for transmission of the haptic data, and the last four layers carry the TB 2 for transmission of the video data.

When the quantity of layers of spatial multiplexing resources exceeds 4, transmission of the video signal and the haptic signal is performed in the foregoing manner. Data amounts of the video signal and the haptic signal differ significantly. For example, for a 30 Mbps@60 FPS video, a size of a single video frame is 60 to 100 Kbytes, and a size of each haptic data packet is 12 to 48 bytes. Therefore, in consideration of a case in which there are 60 channels of haptic sensors on a downlink user side, an average quantity of haptic data packets on which transmission needs to be performed in each slot over an air interface is approximately 20 after haptic compression, and a total amount of the haptic data is 240 to 960 bytes. Based on a typical configuration in the current NR system, only approximately two or three resource block groups (resource block groups, RBGs) are needed for transmission of a haptic data amount (generally, a quantity of RBGs that can be occupied by a user in one slot (in other words, in transmission time of one TB) is dozens). The TB for transmission of the haptic data needs to carry a smaller data amount, and the TB for transmission of the video data needs to carry a larger data amount. Therefore, if the two TBs occupy a same frequency domain resource and a same time domain resource, resource utilization of the TB for transmission of the haptic data is low (for example, a large quantity of padding (padding) bits need to be added).

In conclusion, currently, for a multi-modal service of video data and haptic data, the video data and the haptic data cannot be efficiently and simultaneously scheduled. This cannot ensure high requirements of the haptic data on reliability and a delay, and cannot meet a high requirement of the video data on a rate, affecting communication efficiency, and deteriorating user experience.

In view of this, this application provides a data transmission method. Transmission of first data (the first data may be, for example, video data) is performed on a part of time-frequency resources on one layer of space division resources (for example, a first space division resource), and transmission of second data (the second data may be, for example, haptic data) is performed on the other part of time-frequency resources on the layer of space division resources, or transmission of the second data is performed on another layer of space division resources (for example, a second space division resource). Two sets of different MCSs, NDIs, and RVs are respectively used for transmission of the first data and transmission of the second data, and the first space division resource and the second space division resource correspond to a same time-frequency resource. According to this solution, transmission of the video data and the haptic data can be efficiently and simultaneously implemented. This ensures high requirements of the haptic data on reliability and a delay, and meets a high requirement of the video data on a rate, improving communication efficiency.

For ease of understanding embodiments of this application, a communication system applicable to embodiments of this application is first briefly described with reference to FIG. 4.

FIG. 4 is a diagram of an example of a communication system 40 applicable to a data transmission method in embodiments of this application. As shown in FIG. 4, the communication system 40 includes a radio access network (radio access network, RAN) 400, a core network (core network, CN) 500, and an Internet 600. The RAN 400 includes at least one RAN node (for example, 410a and 410b in FIG. 4, collectively referred to as 410) and at least one terminal (for example, 420a to 420j in FIG. 4, collectively referred to as 420). The RAN 400 may further include another RAN node, for example, a wireless relay device and/or a wireless backhaul device (not shown in FIG. 4). The terminal 420 is connected to the RAN node 410 in a wireless manner. The RAN node 410 is connected to the core network 500 in a wireless or wired manner. A core network device in the core network 500 and a RAN node 510 in the RAN 400 may be different physical devices respectively, or may be a same physical device that integrates a core network logical function and a radio access network logical function.

The RAN 400 may be a cellular system related to a 3rd generation partnership project (3rd generation partnership project, 3GPP), for example, a 4G or 5G mobile communication system, or a future-oriented evolved system (for example, a 6G mobile communication system). The RAN 400 may alternatively be an open access network (open RAN, O-RAN or ORAN), a cloud radio access network (cloud radio access network, CRAN), or a wireless fidelity (wireless fidelity, Wi-Fi) system. The RAN 400 may alternatively be a communication system integrating two or more of the foregoing systems.

The RAN node 410, sometimes also referred to as an access network device, a RAN entity, an access node, or the like, forms a part of the communication system, to help the terminal implement wireless access. A plurality of RAN nodes 410 in the communication system 40 may be nodes of a same type, or may be nodes of different types. In some scenarios, roles of the RAN node 410 and the terminal 420 are relative. For example, the network element 420i in FIG. 4 may be a helicopter or an uncrewed aerial vehicle, and may be configured as a mobile base station. For the terminal 420j that accesses the RAN 400 via the network element 420i, the network element 420i is a base station. However, for the base station 410a, the network element 420i is a terminal. Both the RAN node 410 and the terminal 420 are sometimes referred to as communication apparatuses. For example, the network elements 410a and 410b in FIG. 4 may be understood as communication apparatuses having a base station function, and the network elements 420a to 420j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 410a in FIG. 4), a micro base station or an indoor base station (for example, 410b in FIG. 4), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or some functions of the RAN node in this application may alternatively be implemented by using a software function running on hardware, or may be implemented by using a virtualization function instantiated on a platform (for example, a cloud platform). The RAN node in this application may alternatively be a logical node, a logical module, or software that can implement all or some functions of the RAN node.

In another possible scenario, the plurality of RAN nodes coordinate to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination thereof.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, self driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A device form of the terminal is not limited in embodiments of this application.

It should be understood that, in embodiments of this application, the "RAN node" may alternatively have different expressions. For example, the "RAN node" may also be referred to as a network device, an access network device, a radio access network device, or the like. Unless otherwise specified, the "network device" is used for expression in this application. The network device is an original expression of an access network device (for example, a base station).

It should be understood that the communication system shown in FIG. 4 is merely an example, and should not constitute any limitation on the communication system applicable to embodiments of this application. For example, the communication system shown in FIG. 4 may further include more or smaller network nodes, for example, terminal devices or RAN nodes. The RAN nodes or the terminal devices included in the communication system shown in FIG. 4 may be RAN nodes or terminal devices in the foregoing various forms. Details are not shown one by one in the figure in embodiments of this application.

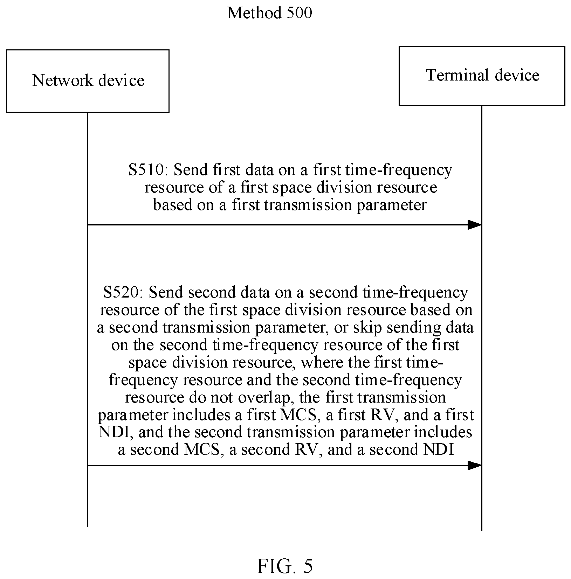

The following describes in detail the method provided in this application with reference to FIG. 5. FIG. 5 is an interaction diagram of a data transmission method according to an embodiment of this application. The method 500 may be applied to the scenario shown in FIG. 4, and certainly may also be applied to another communication scenario. This is not limited herein in this embodiment of this application.

It should be understood that in this embodiment of this application, the method is described by using an example in which the method is performed by a terminal device and a network device. By way of example and not limitation, the terminal device in this application may alternatively be a chip, a chip system, or a processor that supports the terminal device in implementing the method; and the network device in this application may alternatively be a chip, a chip system, or a processor that supports the network device in implementing the method, or may be a logical node, a logical module, or software that can implement all or some functions of the network device.

It should be further understood that, in this application, "sending information to... (the terminal device)" may be understood as that a destination end of the information is the terminal, and may include directly or indirectly sending the information to the terminal device. "Receiving information from... (the terminal device)" may be understood as that a source end of the information is the terminal device, and may include directly or indirectly receiving the information from the terminal device. Necessary processing, such as a format change, may be performed on the information between the source end and the destination end for information sending. However, the destination end can understand valid information from the source end. A similar expression in this application may be understood similarly, and details are not described herein again.

As shown in FIG. 5, the method 500 shown in FIG. 5 may include S510 and S520. The following describes in detail the steps in the method 500 with reference to FIG. 5.

S510: The network device sends first data to the terminal device on a first time-frequency resource of a first space division resource based on a first transmission parameter.

Correspondingly, the terminal device receives (or decodes) the first data from the network device on the first time-frequency resource of the first space division resource based on the first transmission parameter.

S520: The network device sends second data to the terminal device on a second time-frequency resource of the first space division resource based on a second transmission parameter, or skips sending data on the second time-frequency resource of the first space division resource, where the first time-frequency resource and the second time-frequency resource do not overlap, the first transmission parameter includes a first MCS, a first RV, and a first NDI, and the second transmission parameter includes a second MCS, a second RV, and a second NDI.

Correspondingly, the terminal device receives (or decodes) the second data from the network device on the second time-frequency resource of the first space division resource based on the second transmission parameter.

In this embodiment of this application, the first space division resource may be understood as a layer (layer) of spatial multiplexing resources, or a layer (layer) of resources for spatial multiplexing. In other words, the first space division resource may be understood as one layer of space division resources (or one space division resource). The first space division resource separately occupies one resource in time domain and one resource in frequency domain. In other words, in dimensions of time domain and frequency domain, the first space division resource may be divided into the first time-frequency resource and the second time-frequency resource.

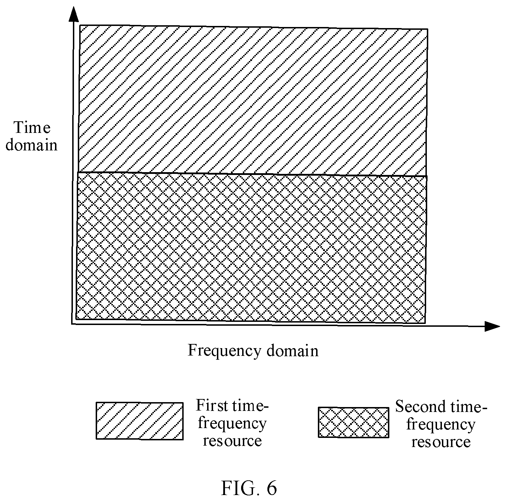

In a possible implementation, for example, as shown in FIG. 6, the first time-frequency resource and the second time-frequency resource may not overlap in time domain, but overlap in frequency domain.

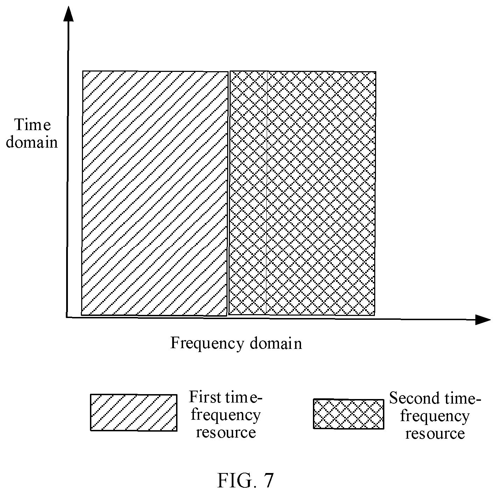

In another possible implementation, for example, as shown in FIG. 7, the first time-frequency resource and the second time-frequency resource may not overlap in frequency domain, but overlap in time domain.

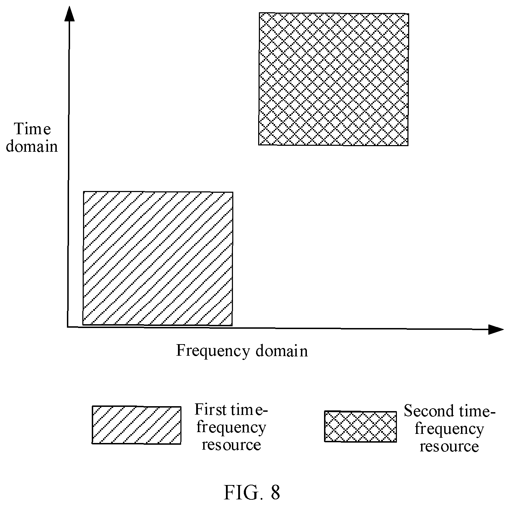

In still another possible implementation, for example, as shown in FIG. 8, the first time-frequency resource and the second time-frequency resource may not overlap in frequency domain or time domain.

In S510, the network device may send the first data to the terminal device on the first time-frequency resource by using the first MCS, the first RV, and the first NDI. For example, the first data may be video data or haptic data. In S520, the network device may send the second data to the terminal device on the second time-frequency resource by using the second MCS, the second RV, and the second NDI. Alternatively, the network device skips sending the second data to the terminal device on the second time-frequency resource. Alternatively, the network device may send the second data to the terminal device on a second space division resource by using the second MCS, the second RV, and the second NDI. It should be understood that the first space division resource and the second space division resource are different space division resources (the two space division resources occupy different space domain resources). For example, the second data may be haptic data or video data.

It should be understood that, in this embodiment of this application, the first data and the second data are data of different modalities or different types. For example, data amounts of the first data and the second data are different, and transmission delay requirements, reliability, and the like may also be different. For example, the first data may be haptic data, and the second data is visual data. Alternatively, the first data may be visual data, and the second data is haptic data, provided that the first data and the second data are different data.

It should be understood that, in this embodiment of this application, the first data and the second data each may be data of another type. The haptic data and the visual data are merely examples, and should not constitute any limitation on specific types of the first data and the second data in this embodiment of this application.

According to the data transmission method provided in this application, transmission of the first data (the first data may be, for example, the video data) is performed on the first time-frequency resource on one layer of space division resources (the first space division resource) by using the first transmission parameter, and transmission of the second data (the second data may be, for example, the haptic data) is performed on the second time-frequency resource on the layer of space division resources or on the second space division resource by using the second transmission parameter. The second space division resource and the first space division resource are different space division resources. Two sets of different MCSs, NDIs, and RVs are respectively used for transmission of the first data and transmission of the second data. According to this technical solution, transmission of two types of data (the first data and the second data) that have different requirements on reliability and a delay can be simultaneously implemented. This ensures reliability and a delay of data transmission that has high requirements on the reliability and the delay, and meets a transmission rate of data that has a high transmission requirement on the rate, meeting different requirements of transmission of different data, and improving communication efficiency of transmission of different data.

Optionally, in S520, in a possible implementation, when a total quantity of layers of spatial multiplexing resources is less than or equal to 4, the network device may send the second data to the terminal device on the second time-frequency resource of the first space division resource by using the second transmission parameter.

For example, when the total quantity of layers of spatial multiplexing resources is less than or equal to 4, in other words, a total quantity of space division resources is less than or equal to 4, the first space division resource may be each layer of space division resources (or each space division resource) in space division resources at or below the fourth layer. In other words, in the space division resources at or below the fourth layer, each layer (each) of space division resources may be referred to as a first space division resource, and each layer of space division resources are divided into a first time-frequency resource and a second time-frequency resource. In other words, the first space division resource may be each of M space division resources, and a value of M may be a positive integer less than or equal to 4. For example, the value of M may be 1, 2, 3, or 4. In this case, the network device may send the first data to the terminal device on the first time-frequency resource of each layer of space division resources based on (which may also be referred to as using) the first transmission parameter, and send the second data to the terminal device on the second time-frequency resource of each layer of space division resources based on the second transmission parameter.

For example, assuming that the total quantity of layers of spatial multiplexing resources is 4, each layer of space division resources in the first layer of space division resources, the second layer of space division resources, the third layer of space division resources, and the fourth layer of space division resources may be referred to as a first space division resource. The network device may send the first data to the terminal device on the first time-frequency resource of each of the first layer of space division resources, the second layer of space division resources, the third layer of space division resources, and the fourth layer of space division resources based on the first transmission parameter, and send the second data to the terminal device on the second time-frequency resource of each of the first layer of space division resources, the second layer of space division resources, the third layer of space division resources, and the fourth layer of space division resources based on the second transmission parameter. Time-frequency resources respectively corresponding to the first layer of space division resources, the second layer of space division resources, the third layer of space division resources, and the fourth layer of space division resources are the same. Space domain resources respectively corresponding to the first layer of space division resources, the second layer of space division resources, the third layer of space division resources, and the fourth layer of space division resources are different, and are different space domain resources.

Optionally, in S520, in another possible implementation, when a total quantity of layers of spatial multiplexing resources is greater than 4, the network device skips sending the data (for example, the second data) to the terminal device on the second time-frequency resource of the first space division resource. In this case, the network device may send the second data to the terminal device on the second space division resource by using the second MCS, the second RV, and the second NDI. It should be understood that, in this embodiment of this application, the second space division resource and the first space division resource are different space division resources, and the second space division resource and the first space division resource occupy a same time domain resource and a same frequency domain resource, but occupy different space domain resources.

For example, when the total quantity of layers of spatial multiplexing resources is greater than 4, in other words, a total quantity of space division resources is greater than 4, the first space division resource may be L space division resources in M space division resources, a value of M is a positive integer greater than 1, and a value of L is a positive integer less than M. A same transmission parameter (for example, the first transmission parameter) is used for the L first space division resources, and a same transmission parameter (for example, the second transmission parameter) is used for remaining M-L space division resources (namely, M-L second space division resources).

For example, in this embodiment of this application, the value of M may be a positive integer greater than 4.

For example, the value of M may be any one of 5, 6, 7, 8, 9, and the like, and the value of L may be any one of 1, 2, 3, and 4. Certainly, the value of M may alternatively be greater than 9, and the value of L may alternatively be another value, provided that the value of L is less than M. This is not limited in this embodiment of this application. In this case, the network device may send the first data to the terminal device on a first time-frequency resource of each first space division resource based on the first transmission parameter. In addition, the network device may send the second data to the terminal device on a second space division resource by using the second transmission parameter.

For example, when the total quantity of layers of spatial multiplexing resources is greater than 4, in other words, the total quantity of space division resources is greater than 4, in a possible implementation, the first space division resource may be each layer of space division resources (or each space division resource) in space division resources at or below the fourth layer. In other words, each layer (each) of space division resources may be referred to as a first space division resource, and each layer of space division resources are divided into a first time-frequency resource and a second time-frequency resource. The network device may send the first data to the terminal device on the first time-frequency resource of each first space division resource based on the first transmission parameter. In addition, the network device may send the second data to the terminal device on the second space division resource by using the second transmission parameter. The second space division resource may be each layer of space division resources in space division resources above the fourth layer. In other words, each layer (each) of space division resources in the space division resources above the fourth layer may be referred to as a second space division resource. A same transmission parameter (for example, the second transmission parameter) is used for the space division resources above the fourth layer.

For example, assuming that the total quantity of layers of spatial multiplexing resources is 8, each layer of space division resources in the first layer of space division resources, the second layer of space division resources, the third layer of space division resources, and the fourth layer of space division resources may be referred to as a first space division resource, and each layer of space division resources in the fifth layer of space division resources, the sixth layer of space division resources, the seventh layer of space division resources, and the eighth layer of space division resources may be referred to as a second space division resource (that is, the value of M is 8, and the value of L is 4). The network device may send the first data to the terminal device on the first time-frequency resource of each of the first layer of space division resources, the second layer of space division resources, the third layer of space division resources, and the fourth layer of space division resources based on the first transmission parameter. In addition, the network device may send the second data to the terminal device on each of the fifth layer of space division resources, the sixth layer of space division resources, the seventh layer of space division resources, and the eighth layer of space division resources based on the second transmission parameter. Space domain resources respectively corresponding to the first layer of space division resources to the eighth layer of space division resources are different, and are respectively different space domain resources. However, time domain resources and frequency domain resources respectively occupied by (corresponding to) the first layer of space division resources to the eighth layer of space division resources are the same.

For another example, when the total quantity of layers of spatial multiplexing resources is greater than 4, in other words, the total quantity of space division resources is greater than 4, in another possible implementation, the first space division resource may be each layer of space division resources (or each space division resource) in space division resources above the fourth layer. In other words, in the space division resources above the fourth layer, each layer (each) of space division resources may be referred to as a first space division resource, each layer of space division resources are divided into a first time-frequency resource and a second time-frequency resource. In this case, the network device may send the first data to the terminal device on a first time-frequency resource of each first space division resource based on the first transmission parameter. In addition, the network device may send the second data to the terminal device on a second space division resource by using the second transmission parameter. The second space division resource may be each layer of space division resources in space division resources at or below the fourth layer. In other words, each layer (each) of space division resources in the space division resources at or below the fourth layer may be referred to as a second space division resource.

For example, assuming that the total quantity of layers of spatial multiplexing resources is 7, each layer of space division resources in the fifth layer of space division resources, the sixth layer of space division resources, and the seventh layer of space division resources may be referred to as a first space division resource, and each layer of space division resources in the first layer of space division resources, the second layer of space division resources, the third layer of space division resources, and the fourth layer of space division resources may be referred to as a second space division resource (that is, the value of M is 7, and the value of L is 3). The network device may send the first data to the terminal device on the first time-frequency resource of each of the fifth layer of space division resources, the sixth layer of space division resources, and the seventh layer of space division resources based on the first transmission parameter. In addition, the network device may send the second data to the terminal device on each of the first layer of space division resources, the second layer of space division resources, the third layer of space division resources, and the fourth layer of space division resources based on the second transmission parameter. Space domain resources respectively corresponding to the first layer of space division resources to the seventh layer of space division resources are different, and are respectively different space domain resources. However, time domain resources and frequency domain resources respectively corresponding to the first layer of space division resources to the seventh layer of space division resources are the same.

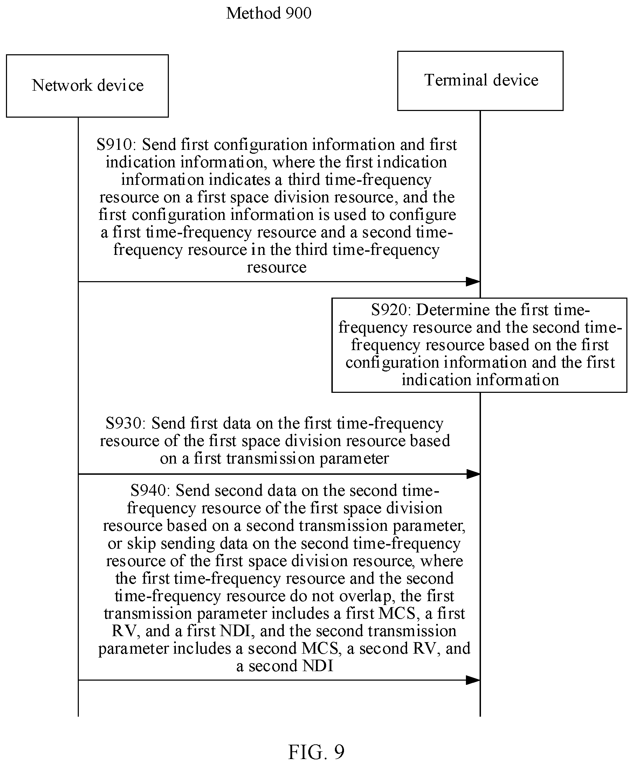

FIG. 9 is an interaction diagram of another example of a data transmission method according to this application. As shown in FIG. 9, the method 900 includes the following steps.

S910: A network device sends first configuration information and first indication information to a terminal device, where the first indication information indicates a third time-frequency resource on a first space division resource, and the first configuration information is used to configure a first time-frequency resource and a second time-frequency resource in the third time-frequency resource. Correspondingly, the terminal device receives the first configuration information and the first indication information.

S920: The terminal device determines the first time-frequency resource and the second time-frequency resource based on the first configuration information and the first indication information.

S930: The network device sends first data to the terminal device on the first time-frequency resource of the first space division resource based on a first transmission parameter. Correspondingly, the terminal device receives the first data from the network device on the first time-frequency resource of the first space division resource based on the first transmission parameter.

S940: The network device sends second data to the terminal device on the second time-frequency resource of the first space division resource based on a second transmission parameter, or skips sending data on the second time-frequency resource of the first space division resource, where the first time-frequency resource and the second time-frequency resource do not overlap, the first transmission parameter includes a first MCS, a first RV, and a first NDI, and the second transmission parameter includes a second MCS, a second RV, and a second NDI. Correspondingly, the terminal device receives the second data from the network device on the second time-frequency resource of the first space division resource based on the second transmission parameter.

For descriptions of S930 and S940, refer to the foregoing specific descriptions of S510 and S520. For brevity, details are not described herein again.

In S910 and S920, the network device may send the first indication information to the terminal device, where the first indication information may indicate the third time-frequency resource on the first space division resource, and the third time-frequency resource includes the first time-frequency resource and the second time-frequency resource. In other words, the first indication information may indicate, to the terminal device, a time domain resource and a frequency domain resource (namely, the third time-frequency resource) that are occupied by the first space division resource. After receiving the first indication information, the terminal device may determine, based on the first indication information, the time domain resource and the frequency domain resource that are occupied by (or correspond to) the first space division resource, in other words, may determine the third time-frequency resource.

In addition, in S910 and S920, the network device may further send the first configuration information to the terminal device, where the first configuration information is used to configure the first time-frequency resource and the second time-frequency resource in the third time-frequency resource. In other words, the first configuration information is used to configure (or indicates) the first time-frequency resource and the second time-frequency resource in the third time-frequency resource. After receiving the first configuration information, the terminal device may determine a specific location (time domain information and frequency domain information of the first time-frequency resource) of the first time-frequency resource in the third time-frequency resource based on the first configuration information, and may further determine a specific location (time domain information and frequency domain information of the first time-frequency resource) of the second time-frequency resource in the third time-frequency resource.

After determining the third time-frequency resource based on the first indication information, the terminal device may determine the specific locations of the first time-frequency resource and the second time-frequency resource in the third time-frequency resource based on the first configuration information. Then, the terminal device may receive the first data on the first time-frequency resource of the first space division resource based on (by using) the first transmission parameter, and receive the second data on the second time-frequency resource of the first space division resource based on the second transmission parameter.

The first configuration information and the first indication information are sent to the terminal device, so that the terminal device determines the specific locations of the first time-frequency resource and the second time-frequency resource in the third time-frequency resource based on the first configuration information and the first indication information, and the terminal device accurately learns of the specific locations of the first time-frequency resource and the second time-frequency resource, to ensure that the terminal device can receive different data on the first time-frequency resource and the second time-frequency resource, ensure that transmission of data can be successfully performed, and improve a data transmission success rate.

It should be further understood that, in this embodiment of this application, the first configuration information and the first indication information may be sent to the terminal device by using a same piece of signaling, or may be separately sent to the terminal by using different signaling. This is not limited in this embodiment of this application.

It should be further understood that the network device may notify the terminal device of the first transmission parameter and the second transmission parameter by using the first indication information, or may notify the terminal device of the first transmission parameter and the second transmission parameter by using other signaling. This is not limited in this embodiment of this application.

In some examples, the first configuration information may be RRC, and the first indication information may be DCI. The first configuration information is implemented by using the RRC, and the first indication information is implemented by using the DCI. In this way, no additional signaling overheads need to be increased, in other words, communication resources can be saved, communication resource utilization can be improved, and efficiency of sending the first configuration information and the first indication information can be ensured.

The following specifically describes a specific process of indicating the first time-frequency resource and the second time-frequency resource to the terminal device by using the RRC and the DCI.

In a possible implementation, when a total quantity of layers of spatial multiplexing resources is less than or equal to 4, in other words, a total quantity of space division resources is less than or equal to 4, indication information may be added to the RRC, and the indication information may indicate that a resource allocated by using the DCI is divided into two different parts, namely, the first time-frequency resource and the second time-frequency resource. The resource allocated (or a resource indicated) by using the DCI is the time domain resource and the frequency domain resource, namely, the third time-frequency resource, that correspond to the first space division resource. The first space division resource may be each layer of space division resources (or each space division resource) in space division resources at or below the fourth layer.

For example, the indication information may be added to the RRC, to indicate to obtain a part (as the first time-frequency resource), through division in ascending order (or in descending order) of frequencies (in other words, based on frequency domain), from the time-frequency resource (the third time-frequency resource) allocated by using the DCI, and a remaining part is the second time-frequency resource; or a part is obtained through division as the second time-frequency resource, and a remaining part is the first time-frequency resource.

For another example, the indication information may be added to the RRC, to indicate to obtain a part (as the first time-frequency resource), through division in ascending order (or in descending order) of time (in other words, based on time domain), from the time-frequency resource (the third time-frequency resource) allocated by using the DCI, and a remaining part is the second time-frequency resource; or a part is obtained through division as the second time-frequency resource, and a remaining part is the first time-frequency resource.

In other words, the indication information in the RRC may indicate a proportion of the first time-frequency resource in the third time-frequency resource, or indicate a proportion of the second time-frequency resource in the third time-frequency resource.

For example, a frequency domain division indication (FrequencyDomianDivision) field and/or a time domain division indication (TimeDomianDivision) field may be added to the RRC signaling, and each field indicates whether a division function is valid and a division size.

In this embodiment of this application, in a possible implementation, the frequency domain division indication (FrequencyDomianDivision) field and/or the time domain division indication (TimeDomianDivision) field added to the RRC signaling are/is as follows:

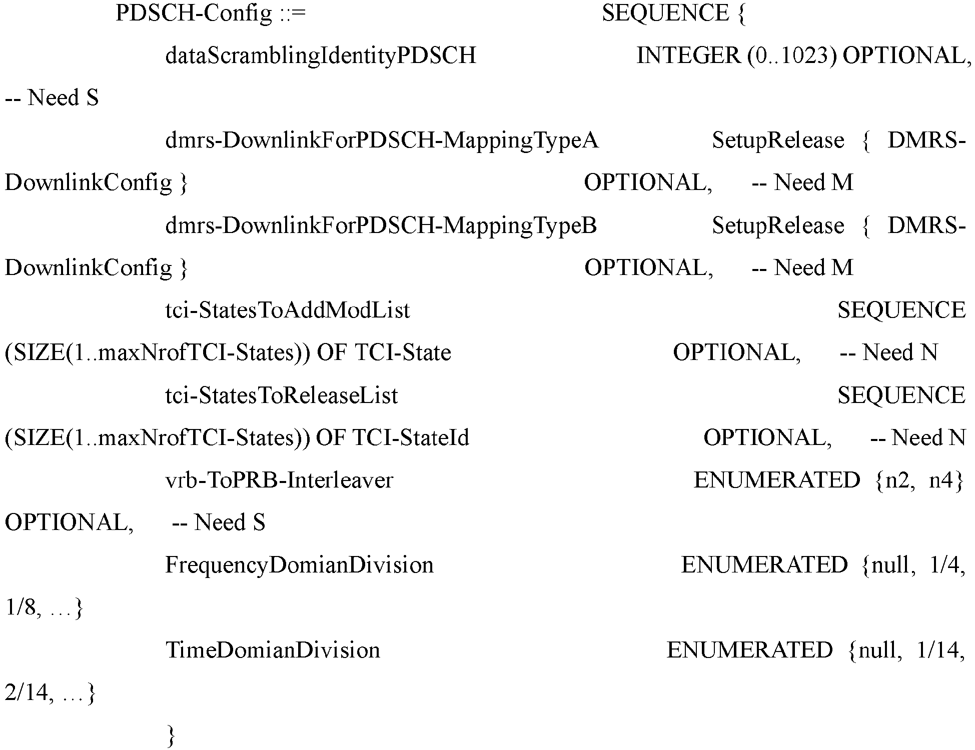

For the "FrequencyDomianDivision" field in the RRC, if a value of the field is "null", it indicates that the third time-frequency resource allocated by using the DCI is not divided in frequency domain. If a value of the field is "1/4", it indicates that, for the third time-frequency resource allocated by using the DCI, the first quarter is obtained through division as the first time-frequency resource in frequency domain, and the last three quarters are obtained through division as the second time-frequency resource in frequency domain; or the last quarter is obtained through division as the first time-frequency resource in frequency domain, and the first three quarters are obtained through division as the second time-frequency resource in frequency domain. If a value of the field is "1/8", it indicates that, for the third time-frequency resource allocated by using the DCI, the first one eighth is obtained through division as the first time-frequency resource in frequency domain, and the last seven eighths is obtained through division as the second time-frequency resource in frequency domain; or the last one eighth is obtained through division as the first time-frequency resource in frequency domain, and the first seven eighths is obtained through division as the second time-frequency resource in frequency domain.

For the "TimeDomianDivision" field in the RRC, if a value of the field is "null", it indicates that the third time-frequency resource allocated by using the DCI is not divided in time domain. If a value of the field is "1/14", it indicates that, for the third time-frequency resource allocated by using the DCI, the first one fourteenth is obtained through division as the first time-frequency resource in time domain, and the last thirteen fourteenths is obtained through division as the second time-frequency resource in time domain; or the last one fourteenth is obtained through division as the first time-frequency resource in time domain, and the first thirteen fourteenths is obtained through division as the second time-frequency resource in time domain. If a value of the field is "2/14", it indicates that, for the third time-frequency resource allocated by using the DCI, the first two fourteenths is obtained through division as the first time-frequency resource in time domain, and the last twelve fourteenths is obtained through division as the second time-frequency resource in time domain; or the last two fourteenths is obtained through division as the first time-frequency resource in time domain, and the first twelve fourteenths is obtained through division as the second time-frequency resource in time domain.

It should be understood that the "TimeDomianDivision" field and the "FrequencyDomianDivision" field that are added to the RRC are merely examples. In another implementation of this application, another field may be added to the RRC to indicate that the time-frequency resource of the first space division resource allocated by using the DCI is divided in time domain and/or frequency domain. This is not limited in this embodiment of this application.

When the total quantity of layers of spatial multiplexing resources is less than or equal to 4, a configuration of a "maxNrofCodeWordsScheduledByDCI" field in the RRC signaling is 1.

The network device may preconfigure a resource division size in the RRC signaling based on data amounts of video data and haptic data. For example, for a 30 Mbps@60 FPS video, a size of a single video frame is 60 to 100 Kbytes, and a size of each haptic data packet is 12 to 48 bytes. In consideration of a case in which there are 60 sensors on a downlink user side, an average quantity of haptic packets on which transmission needs to be performed over an air interface is 20, and a total size of the haptic data is 240 to 960 bytes. The network device may determine sizes of the first time-frequency resource and the second time-frequency resource based on the data amounts of the video data and the haptic data, to indicate the sizes of the first time-frequency resource and the second time-frequency resource to the terminal device in the RRC.

The network device may indicate the time-frequency resource (namely, the third time-frequency resource) of the first space division resource to the terminal device by using the DCI. In addition, the network device may further indicate the first transmission parameter and the second transmission parameter to the terminal device by using the DCI.

For example, the network device may send the DCI to the terminal device, where an existing DCI format (1_1) (Format 1_1) may be reused for the DCI, and the DCI may indicate time domain information and frequency domain information of the third time-frequency resource. After receiving RCC and the DCI, the terminal device may determine the time domain information and the frequency domain information of the third time-frequency resource based on the DCI, and may determine the first time-frequency resource and the second time-frequency resource in the third time-frequency resource based on the indication information in the RCC.

Because a value of the "maxNrofCodeWordsScheduledByDCI" field in the RRC signaling is 1, in other words, when the quantity of layers (layers) of spatial multiplexing resources does not exceed 4, one piece of DCI can be used to schedule only one TB (namely, a TB 1). However, there are two sets of transmission parameter fields in the DCI. Each set of transmission parameter fields includes one MCS field, one NDI field, and one RV field. Parameters indicated by each set of transmission parameter fields are used for transmission of one TB. In the two sets of transmission parameter fields, only one set of transmission parameter fields is activated or usable. In other words, there may be two sets of transmission parameter fields in the DCI. A parameter indicated by one set of transmission parameters is the first transmission parameter, and a parameter indicated by the other set of transmission parameter fields is the second transmission parameter. A first set of transmission parameter fields includes a first MCS field, a first NDI field, and a first RV field, and is used for transmission of the TB 1 scheduled by using the DCI. A second set of transmission parameter fields includes a second MCS field, a second NDI field, and a second RV field, and is used for transmission of a TB 2 scheduled by using the DCI. Although in this case, only the TB 1 is scheduled by using the DCI, and the TB 2 is not scheduled, in other words, the network device actually does not transmit the TB 2, the transmission parameter fields (the second MCS field, the second NDI field, and the second RV field) corresponding to the TB 2 still exist in the DCI.

In this embodiment, because the resource (namely, the third time-frequency resource) allocated by using the DCI is used for transmission of the TB 1, the network device may send the haptic data to the terminal device on the first time-frequency resource in the third time-frequency resource by using the transmission parameter (the first MCS indicated by the first MCS field, the first NDI indicated by the first NDI field, and the first RV indicated by the first RV field) of the TB 1. In addition, the network device may send the video data to the terminal device on the second time-frequency resource in the third time-frequency resource by using the transmission parameter (the second MCS indicated by the second MCS field, the second NDI indicated by the second NDI field, and the second RV indicated by the second RV field) of the TB 2. Alternatively, the network device may send the video data to the terminal device on the first time-frequency resource in the third time-frequency resource by using the transmission parameter (the first MCS, the first NDI, and the first RV) for transmission of the TB 1. In addition, the network device may send the haptic data to the terminal device on the second time-frequency resource in the third time-frequency resource by using the transmission parameter (the second MCS, the second NDI, and the second RV) of the TB 2.

After the terminal device receives the RRC, if the value of the "maxNrofCodeWordsScheduledByDCI" field in the RRC signaling is 1, and the RRC indicates that the time-frequency resource of the first space division resource allocated by using the DCI is divided into two parts (namely, the first time-frequency resource and the second time-frequency resource), the terminal device, after receiving the DCI, may first determine the time-frequency resource (namely, the third time-frequency resource) of the first space division resource allocated by using the DCI, and then determine the first time-frequency resource and the second time-frequency resource in the third time-frequency resource based on an indication in the RRC. In this case, the terminal device may determine that the first data (for example, the haptic data) needs to be received on the first time-frequency resource by using the transmission parameter (the first MCS, the first NDI, and the first RV) for transmission of the TB 1, and the first data (for example, the video data) needs to be received on the first time-frequency resource by using the transmission parameter (the second MCS, the second NDI, and the second RV) of the TB 2.

In this embodiment of this application, in a possible implementation, if the RRC indicates that the time-frequency resource of the first space division resource allocated by using the DCI is divided into the first time-frequency resource and the second time-frequency resource, and the value of the "maxNrofCodeWordsScheduledByDCI" field in the RRC signaling is 1, the terminal device receives the first data (for example, the haptic data) on the first time-frequency resource by using (automatically by using) the transmission parameter (the first MCS, the first NDI, and the first RV) of the TB 1 by default, and receives the second data (for example, the video data) on the second time-frequency resource by using the transmission parameter (the second MCS, the second NDI, and the second RV) of the TB 2. In other words, "the value of the 'maxNrofCodeWordsScheduledByDCI' field in the RRC signaling is 1" and "the RRC indicates that the time-frequency resource of the first space division resource allocated by using the DCI is divided into the first time-frequency resource and the second time-frequency resource (in other words, when frequency domain resource division or time-frequency resource division in the RRC is a valid value)" may be used as implicit indication information of such a behavior of the terminal device as "receiving the first data on the first time-frequency resource by using the transmission parameter for transmission of the TB 1, and receiving the second data on the second time-frequency resource by using the transmission parameter of the TB 2".

Certainly, in another implementation of this application, the network device may alternatively send indication information to the terminal, to indicate the terminal device to perform such a behavior as "receiving the first data on the first time-frequency resource by using the transmission parameter for transmission of the TB 1, and receiving the second data on the second time-frequency resource by using the transmission parameter of the TB 2". This is not limited herein in this embodiment of this application.

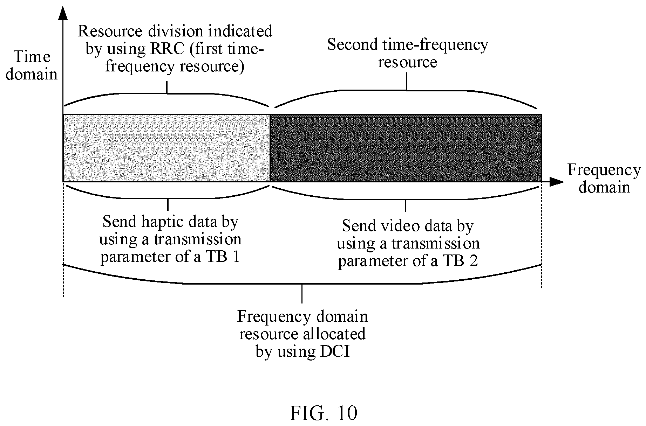

For example, FIG. 10 is a diagram of an example in which the third time-frequency resource indicated (allocated) by using the DCI is divided into the first time-frequency resource and the second time-frequency resource in frequency domain. As shown in FIG. 10, the first time-frequency resource and the second time-frequency resource correspond to a same time domain resource but different frequency domain resources. On the first time-frequency resource, the network device may send the haptic data by using the transmission parameter of the TB 1, and on the second time-frequency resource, the network device may send the video data by using the transmission parameter of the TB 2. Under a same channel condition, a smaller MCS may be used for the data of a haptic part than the video data (because an index value of the MCS in the transmission parameter of the TB 2 is greater than an index value of the MCS in the transmission parameter of the TB 1), to improve reliability.

Optionally, in a possible implementation, if transmission of a small amount of haptic data is performed on the first time-frequency resource, a part of the video data may also be used as haptic data for transmission. In other words, the network device may also perform transmission of a part of visual data on the first time-frequency resource by using the transmission parameter of the TB 1. In this way, resource waste can be avoided, and utilization of the first time-frequency resource can be improved.

When the quantity of layers (layers) of spatial multiplexing resources does not exceed 4, the indication information is added to the RRC to indicate the terminal device that the time-frequency resource that is allocated by using the DCI and that is used for transmission of the TB 1 is divided into the first time-frequency resource and the second time-frequency resource, only the indication information needs to be added to the RRC, and the DCI does not need to be changed. In this way, a change to signaling is small, communication resources can be saved, and communication resource utilization can be improved.

In this embodiment of this application, in another possible implementation, when a total quantity of layers of spatial multiplexing resources is greater than 4, in other words, a total quantity of space division resources is greater than 4, indication information may also be added to the RRC, and the indication information may indicate that a resource allocated by using the DCI is divided into two different parts, namely, the first time-frequency resource and the second time-frequency resource. The first time-frequency resource is used for transmission of the first data (for example, the first data is haptic data), and the second time-frequency resource is used for transmission of the second data (for example, the second data is video data).

When the total quantity of layers of spatial multiplexing resources is greater than 4, because the total quantity of layers of spatial multiplexing resources is greater than 4, the DCI may be used to schedule two TBs: a TB 1 and a TB 2. Transmission of the TB 1 may be performed by using a part of the space division resources, transmission of the TB 2 may be performed by using the other part of the space division resources. The first transmission parameter is used when transmission of the TB 1 is performed, and the second transmission parameter is used when transmission of the TB 2 is performed. In other words, when the total quantity of layers of spatial multiplexing resources is greater than 4, the total spatial multiplexing resources may be divided into (configured as) two parts (a first part of space division resources and a second part of space division resources). The first part of space division resources may include one or more space division resources, and the second part of space division resources may also include one or more space division resources. Transmission of the TB 1 is performed on the first part of space division resources by using the first transmission parameter, and transmission of the TB 2 is performed on the second part of space division resources by using the second transmission parameter. Time-frequency resources corresponding to the first part of space division resources and the second part of space division resources are all the same. Each of the first part of space division resources may be referred to as a first space division resource, and each of the second part of space division resources may be referred to as a second space division resource.

For example, assuming that the total quantity of layers of spatial multiplexing resources is 8, the first part of space division resources may include the first layer of space division resources to the fourth layer of space division resources, the second part of space division resources may include the fifth layer of space division resources to the eighth layer of space division resources (in other words, the first space division resources are four space division resources in eight space division resources). Alternatively, the first part of space division resources may include the first layer of space division resources to the fifth layer of space division resources, and the second part of space division resources may include the sixth layer of space division resources to the eighth layer of space division resources (in other words, the first space division resources are five space division resources in eight space division resources). Space domain resources respectively corresponding to the first layer of space division resources to the eighth layer of space division resources are different, and are respectively different space domain resources. However, time domain resources and frequency domain resources (namely, the third time-frequency resource) respectively occupied by (corresponding to) the first layer of space division resources to the eighth layer of space division resources are the same.

It should be understood that, in this embodiment of this application, when the total quantity of layers of spatial multiplexing resources is greater than 4, space division resources included in the first part of space division resources and space division resources included in the second part of space division resources may be preconfigured, or may be indicated by using the DCI.

The resource allocated (or a resource indicated) by using the DCI may be a time-frequency resource (namely, the third time-frequency resource) corresponding to the first part of space division resources or the second part of space division resources. When the total quantity of layers of spatial multiplexing resources is greater than 4, the DCI may be used to schedule the TB 1 and the TB 2. In other words, the third time-frequency resource may be used for transmission of the TB 1 or the TB 2. In other words, in this embodiment of this application, the time-frequency resource (namely, the third time-frequency resource) that is allocated by using the DCI and that is used for transmission of the TB 1 may be divided into the first time-frequency resource and the second time-frequency resource, or the time-frequency resource (the third time-frequency resource) for transmission of the TB 2 is divided into the first time-frequency resource and the second time-frequency resource.

For example, the indication information may be added to the RRC, to indicate to obtain a part (as the first time-frequency resource), through division in ascending order (or in descending order) of frequencies (in other words, based on frequency domain), from the time-frequency resource (the third time-frequency resource) allocated by using the DCI, and a remaining part is the second time-frequency resource.

For another example, the indication information may be added to the RRC, to indicate to obtain a part (as the first time-frequency resource), through division in ascending order (or in descending order) of time (in other words, based on time domain), from the time-frequency resource (the third time-frequency resource) allocated by using the DCI, and a remaining part is the second time-frequency resource.

For example, a frequency domain division indication (FrequencyDomianDivision) field and/or a time domain division indication (TimeDomianDivision) field may be added to the RRC signaling, and each field indicates whether a division function is valid and a division size.

For an example of the frequency domain division indication field and/or the time domain division indication field in the RRC, refer to the example of the frequency domain division indication (FrequencyDomianDivision) field and/or the time domain division indication (TimeDomianDivision) field added to the RRC signaling. For brevity, details are not described herein again.

When the quantity of layers (layers) of spatial multiplexing resources exceeds 4, a value of a "maxNrofCodeWordsScheduledByDCI" field in the RRC signaling is 2. The network device may determine sizes of the first time-frequency resource and the second time-frequency resource based on data amounts of the video data and the haptic data, to indicate the sizes of the first time-frequency resource and the second time-frequency resource to the terminal device in the RRC.

The network device may indicate the third time-frequency resource to the terminal device by using the DCI. The third time-frequency resource may be used for transmission of the TB 1, or may be used for transmission of the TB 2. In addition, the network device may further indicate the first transmission parameter and the second transmission parameter to the terminal device by using the DCI.

For example, the network device may send the DCI to the terminal device, where an existing DCI format (1_1) (Format 1_1) may be reused for the DCI, and the DCI may indicate time domain information and frequency domain information of the third time-frequency resource. After receiving RCC and the DCI, the terminal device may determine the time domain information and the frequency domain information of the third time-frequency resource based on the DCI, and may determine the first time-frequency resource and the second time-frequency resource in the third time-frequency resource based on the indication information in the RCC.

Because the value of the "maxNrofCodeWordsScheduledByDCI" field in the RRC signaling is 2, in other words, when the quantity of layers (layers) of spatial multiplexing resources exceeds 4, one piece of DCI can be used to schedule two TBs, and there are two sets of transmission parameter fields in the DCI. Each set of transmission parameter fields includes one MCS field, one NDI field, and one RV field. Parameters indicated by each set of transmission parameter fields are used for transmission of one TB. In other words, there may be two sets of transmission parameter fields in the DCI. One set of transmission parameters indicates the first transmission parameter, and the other set of transmission parameter fields indicates the second transmission parameter. A first set of transmission parameter fields includes a first MCS field, a first NDI field, and a first RV field, and is used for transmission of the TB 1 scheduled by using the DCI. A second set of transmission parameter fields includes a second MCS field, a second NDI field, and a second RV field, and is used for transmission of the TB 2 scheduled by using the DCI.

In a possible implementation, assuming that the resource (namely, the third time-frequency resource) allocated by using the DCI is used for transmission of the TB 1, the network device may send the haptic data to the terminal device on the first time-frequency resource in the third time-frequency resource by using the transmission parameter (for example, the first MCS indicated by the first MCS field, the first NDI indicated by the first NDI field, and the first RV indicated by the first RV field) of the TB 1. In addition, the network device may send the video data to the terminal device on the second space division resource by using the transmission parameter (for example, the second MCS indicated by the second MCS field, the second NDI indicated by the second NDI field, and the second RV indicated by the second RV field) of the TB 2.

In another possible implementation, assuming that the resource (namely, the third time-frequency resource) allocated by using the DCI is used for transmission of the TB 2, the network device may send the haptic data to the terminal device on the first time-frequency resource in the third time-frequency resource by using the transmission parameter (for example, the second MCS indicated by the second MCS field, the second NDI indicated by the second NDI field, and the first RV indicated by the second RV field) of the TB 2. In addition, the network device may send the video data to the terminal device on the first space division resource by using the transmission parameter (for example, the first MCS indicated by the first MCS field, the first NDI indicated by the first NDI field, and the first RV indicated by the first RV field) of the TB 1.

After the terminal device receives the RRC, if the value of the "maxNrofCodeWordsScheduledByDCI" field in the RRC signaling is 2, and the RRC indicates that the third time-frequency resource allocated by using the DCI is divided into two parts (the first time-frequency resource and the second time-frequency resource), in other words, when frequency domain resource division or time-frequency resource division in the RRC is a valid value, the terminal device, after receiving the DCI, may first determine the third time-frequency resource allocated by using the DCI, and then determine the first time-frequency resource and the second time-frequency resource in the third time-frequency resource based on an indication in the RRC. In this case, the terminal device may determine that the first data (for example, the haptic data) needs to be received on the first time-frequency resource by using the transmission parameter (the first MCS, the first NDI, and the first RV) for transmission of the TB 1, and the second data (for example, the video data) needs to be received on the second space division resource by using the transmission parameter (the second MCS, the second NDI, and the second RV) of the TB 2.

In this embodiment of this application, in a possible implementation, if the RRC indicates that the time-frequency resource of the first space division resource allocated by using the DCI is divided into the first time-frequency resource and the second time-frequency resource, and the value of the "maxNrofCodeWordsScheduledByDCI" field in the RRC signaling is 2, the terminal device receives the first data (for example, the haptic data) on the first time-frequency resource by using (automatically by using) the transmission parameter (the first MCS, the first NDI, and the first RV) of the TB 1 by default, and receives the second data (for example, the video data) on the second space division resource by using the transmission parameter (the second MCS, the second NDI, and the second RV) of the TB 2. In other words, "the value of the 'maxNrofCodeWordsScheduledByDCI' field in the RRC signaling is 2" and "the RRC indicates that the time-frequency resource of the first space division resource allocated by using the DCI is divided into the first time-frequency resource and the second time-frequency resource (in other words, when frequency domain resource division or time-frequency resource division in the RRC is a valid value)" may be used as implicit indication information of such a behavior of the terminal device as "receiving the first data on the first time-frequency resource by using the transmission parameter for transmission of the TB 1, and receiving the second data on the second space division resource by using the transmission parameter of the TB 2".

Certainly, in another implementation of this application, the network device may alternatively send indication information to the terminal, to indicate the terminal device to perform such a behavior as "receiving the first data on the first time-frequency resource by using the transmission parameter for transmission of the TB 1, and receiving the second data on the second space division resource by using the transmission parameter of the TB 2". This is not limited in this embodiment of this application.

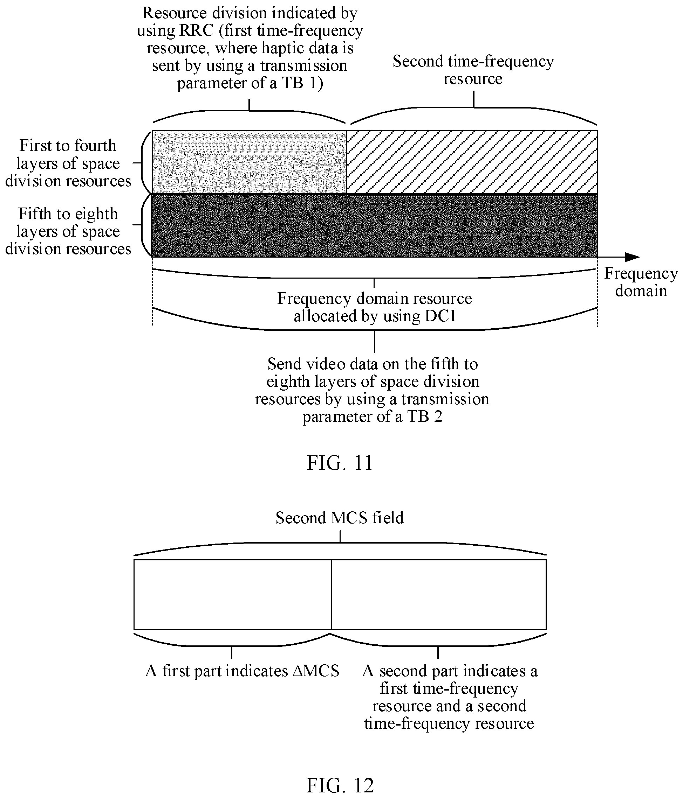

For example, FIG. 11 is a diagram of an example in which the third time-frequency resource on the first space division resource (namely, each layer of the first four layers of space division resources) that is indicated (allocated) by using the DCI and that is used for transmission of the TB 1 is divided into the first time-frequency resource and the second time-frequency resource in frequency domain when the quantity of layers (layers) of spatial multiplexing resources is 8. The first four layers (the first layer to the fourth layer) of spatial multiplexing resources are used for transmission of the TB 1, and the last four layers (the fifth layer to the eighth layer) of spatial multiplexing resources are used for transmission of the TB 2. As shown in FIG. 11, the first time-frequency resource and the second time-frequency resource correspond to a same time domain resource but different frequency domain resources. On the first time-frequency resource, the network device may send the haptic data by using the transmission parameter of the TB 1, and on the second space division resource (namely, the last four layers of space division resources), the network device may send the video data by using the transmission parameter of the TB 2. In addition, the network device may not use the second time-frequency resource (in other words, skip sending or receiving data on the second time-frequency resource), or the network device may send the data to another terminal device on the second time-frequency resource.

When the quantity of layers (layers) of spatial multiplexing resources exceeds 4, the indication information is added to the RRC to indicate the terminal device that the time-frequency resource that is allocated by using the DCI and that is used for transmission of the TB 1 or the TB 2 is divided into the first time-frequency resource and the second time-frequency resource, only the indication information needs to be added to the RRC, and the DCI does not need to be changed. In this way, a change to signaling is small, communication resources can be saved, and communication resource utilization can be improved.

When the total quantity of layers of spatial multiplexing resources is less than or equal to 4, there may be two sets of transmission parameter fields in the DCI, where the first set of transmission parameter fields includes the first MCS field, the first NDI field, and the first RV field, and indicates the first transmission parameter for transmission of the TB 1 scheduled by using the DCI, and the second set of transmission parameter fields includes the second MCS field, the second NDI field, and the second RV field, and indicates the second transmission parameter for transmission of the TB 2. Therefore, although in this case, only the TB 1 is scheduled by using the DCI, and the TB 2 is not scheduled, in other words, the network device actually does not transmit the TB 2, in other words, the second transmission parameter is not used or activated. Therefore, in another possible implementation, indication information may be added to the RRC, and the indication information may indicate whether to use (or activate) the second transmission parameter.

For example, a second TB parameter enabling field (SecondTB-ENABLE) may be added to the RRC, and a value of the field may be a Boolean variable (BOOL). For example, the value of the field may be "0" or "1". The value "0" indicates to use (or activate) the second transmission parameter, and the value "1" indicates not to use the second transmission parameter. Alternatively, the value "1" indicates to use (or activate) the second transmission parameter, and the value "0" indicates not to use the second transmission parameter.

For example, the second TB parameter enabling field (SecondTB-ENABLE) added to the RRC signaling is as follows:

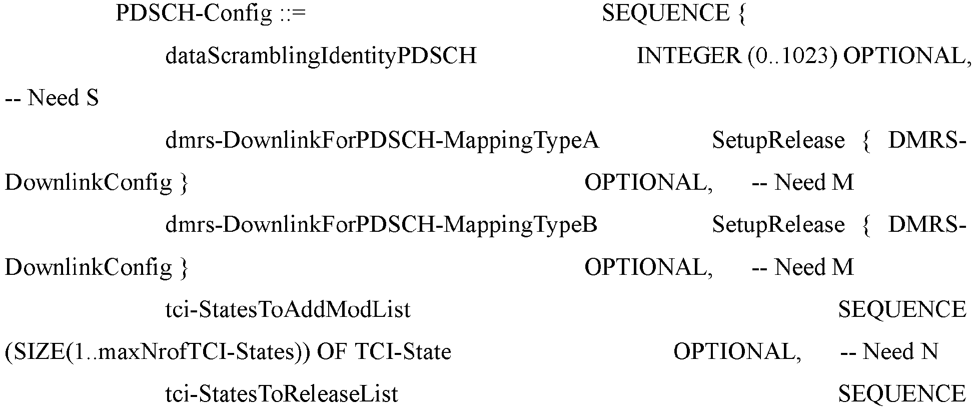

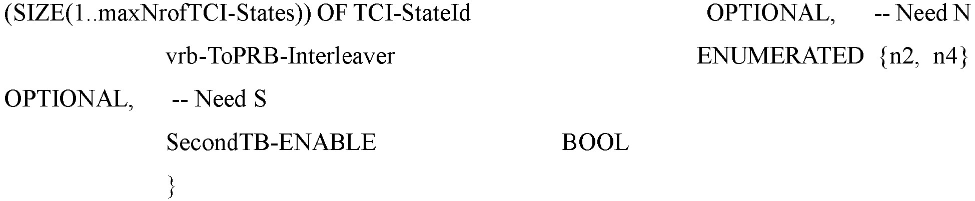

It should be understood that the "SecondTB-ENABLE" field added to the RRC is merely an example. In another implementation of this application, another field may alternatively be added to the RRC to indicate "whether to use (or activate) the second transmission parameter". This is not limited in this embodiment of this application.

If the "SecondTB-ENABLE" field added to the RRC indicates "to use (or activate) the second transmission parameter", for the DCI sent by the network device to the terminal device, there may be two sets of transmission parameter fields in the DCI, where the first set of transmission parameter fields includes the first MCS field, the first NDI field, and the first RV field, and indicates the first transmission parameter for transmission of the TB 1 scheduled by using the DCI, and the second set of transmission parameter fields includes the second MCS field, the second NDI field, and the second RV field, and indicates the second transmission parameter. Therefore, the second set of transmission parameter fields in the DCI may indicate the sizes of the first time-frequency resource and the second time-frequency resource in the time-frequency resource (namely, the third time-frequency resource) of the first space division resource allocated (indicated) by using the DCI.

Optionally, in a possible implementation, the network device may send the DCI to the terminal device, where the existing DCI format (1_1) (Format 1_1) may be reused for the DCI, and the DCI includes the "SecondTB-ENABLE" field. When the "SecondTB-ENABLE" field indicates to "use (or activate) the second transmission parameter", as shown in FIG. 12, a first part of the second MCS field (for example, the first two bits of the second MCS field) in the DCI indicates the second MCS. For example, the first part of the second MCS field may indicate an offset value (ΔMCS) between an index value of the second MCS and an index value of the first MCS. In this manner, the first part of the second MCS field may implement content originally indicated by the second MCS field, and a second part of the second MCS field (for example, the last three bits of the second MCS field) indicates the first time-frequency resource and the second time-frequency resource. In other words, some bits of the second MCS field may indicate the sizes of the first time-frequency resource and the second time-frequency resource in the time-frequency resource (namely, the third time-frequency resource) of the first space division resource allocated by using the DCI, and different bit values may represent different division proportions or division forms of the third time-frequency resource. In this manner, the first time-frequency resource and the second time-frequency resource can be indicated by using the DCI, and no additional field needs to be added to the DCI to indicate the first time-frequency resource and the second time-frequency resource. In this way, communication resources can be saved, and communication resource utilization can be improved.

Optionally, the DCI may also be referred to as "second indication information".

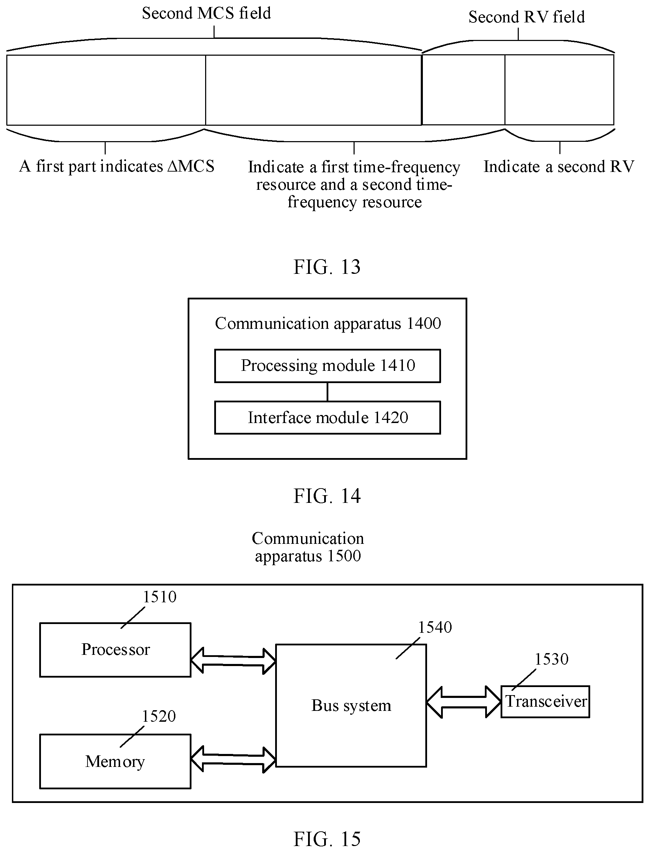

Optionally, in another possible implementation, the network device may send the DCI to the terminal device, where the existing DCI format (1_1) (Format 1_1) may be reused for the DCI, and the DCI includes the "SecondTB-ENABLE" field. When the "SecondTB-ENABLE" field indicates to "use (or activate) the second transmission parameter", as shown in FIG. 13, a first part of the second MCS field (for example, the first two bits of the second MCS field) in the DCI indicates the second MCS. For example, the first part of the second MCS field may indicate an offset value between an index value of the second MCS and an index value of the first MCS. In addition, the second RV field may be reduced from an original length of 2 bits to a length of 1 bit, and the remaining 1 bit of the second RV field and a second part of the second MCS field (for example, the last three bits of the second MCS field) jointly indicate the first time-frequency resource and the second time-frequency resource. In other words, some bits of the second MCS field and some bits of the second RV field may jointly indicate the sizes of the first time-frequency resource and the second time-frequency resource in the time-frequency resource (namely, the third time-frequency resource) of the first space division resource allocated by using the DCI, and different bit values may represent different division proportions or division forms of the third time-frequency resource.

In this manner, the first time-frequency resource and the second time-frequency resource can be indicated by using the DCI, and no additional field needs to be added to the DCI to indicate the first time-frequency resource and the second time-frequency resource. In this way, communication resources can be saved, and communication resource utilization can be improved.

Certainly, the two manners are merely examples. In another implementation of this application, the first time-frequency resource and the second time-frequency resource may alternatively be indicated by using in another field (for example, a newly added field or some bits of another field) in the DCI.

The network device may send, to the terminal device, RRC to which "whether to use (or activate) the second transmission parameter" is added and the DCI.

If the value of the "maxNrofCodeWordsScheduledByDCI" field in the RRC signaling is 1, and the RRC indicates to "use (or activate) the second transmission parameter", the network device may send the haptic data to the terminal device on the first time-frequency resource in the third time-frequency resource by using the transmission parameter (the first MCS, the first NDI, and the first RV) of the TB 1, and send the video data to the terminal device on the second time-frequency resource in the third time-frequency resource by using the transmission parameter (the second MCS, the second NDI, and the second RV) of the TB 2.

After the terminal device receives the RRC, if the value of the "maxNrofCodeWordsScheduledByDCI" field in the RRC signaling is 1, and the RRC indicates to "use (or activate) the second transmission parameter", the terminal device, after receiving the DCI, may determine the time domain information and the frequency domain information of the third time-frequency resource based on the DCI, and may further determine the first time-frequency resource and the second time-frequency resource in the third time-frequency resource based on the second MCS field in the DCI or the second MCS field and the second RV field in the DCI.

After the terminal device receives the RRC, if the value of the "maxNrofCodeWordsScheduledByDCI" field in the RRC signaling is 1, but the RRC indicates "not to use (or not to activate) the second transmission parameter", the terminal device, after receiving the DCI, may interpret the DCI in an existing manner. In this case, the DCI does not indicate the first time-frequency resource and the second time-frequency resource.

In this embodiment, in a possible implementation, if the value of the "maxNrofCodeWordsScheduledByDCI" field in the RRC signaling is 1, and the RRC indicates to "use (or activate) the second transmission parameter", the terminal device receives the first data (for example, the haptic data) on the first time-frequency resource by using (automatically by using) the transmission parameter (the first MCS, the first NDI, and the first RV) of the TB 1 by default, and receives the second data (for example, the video data) on the second time-frequency resource by using the transmission parameter (the second MCS, the second NDI, and the second RV) of the TB 2. In other words, such two pieces of information as "the value of the 'maxNrofCodeWordsScheduledByDCI' field in the RRC signaling is 1" and "the RRC indicates to "use (or activate) the second transmission parameter"" may be used as implicit indication information of such a behavior of the terminal device as "receiving the first data on the first time-frequency resource by using the transmission parameter for transmission of the TB 1, and receiving the second data on the second time-frequency resource by using the transmission parameter of the TB 2".

Certainly, in another implementation of this application, the network device may alternatively send indication information to the terminal, to indicate the terminal device to perform such a behavior as "receiving the first data on the first time-frequency resource by using the transmission parameter for transmission of the TB 1, and receiving the second data on the second time-frequency resource by using the transmission parameter of the TB 2". This is not limited herein in this embodiment of this application.

When the quantity of layers (layers) of spatial multiplexing resources does not exceed 4, the indication information is added to the RRC to indicate to "use (or activate) the second transmission parameter", and the second MCS field in the DCI or the second MCS field and the second RV field in the DCI indicate the terminal device that the time-frequency resource that is allocated by using the DCI and that is used for transmission of the TB 1 is divided into the first time-frequency resource and the second time-frequency resource. Only the indication information needs to be added to the RRC, a length of the DCI does not need to be increased, and only a manner of interpreting some resources in the DCI needs to be changed. In this way, a change to signaling is small, communication resources can be saved, and communication resource utilization can be improved.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing method embodiments may be unnecessary, or some steps may be newly added. Alternatively, any two or more of the foregoing embodiments are combined. Such modified, changed, or combined solution also falls within the scope of embodiments of this application.

It should be further understood that division of manners, cases, categories, and embodiments in embodiments of this application is merely intended for ease of description, and should not constitute a particular limitation. Features in the manners, categories, cases, and embodiments may be combined without contradiction.

It should be further understood that various numbers in embodiments of this application are merely used for differentiation for ease of description, but are not intended to limit the scope of embodiments of this application. Sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of embodiments of this application emphasize differences between various embodiments. For same or similar parts that are not mentioned, refer to the embodiments. For brevity, details are not described herein again.

The foregoing describes in detail the methods in embodiments of this application with reference to FIG. 1 to FIG. 13. The following describes in detail communication apparatuses in embodiments of this application with reference to FIG. 14 to FIG. 18.

In embodiments, division of functional modules may be performed on a terminal device and a network device according to the foregoing methods. For example, each functional module may be obtained through division based on each corresponding function, or two or more functions may be integrated into one processing module. The integrated module may be implemented in a form of hardware. It should be noted that module division in embodiments is an example and is merely logical function division. During actual implementation, there may be another division manner.

It should be noted that related content of the steps in the foregoing method embodiments may be referenced to function descriptions of corresponding functional modules, and details are not described herein again.

The terminal device and the network device provided in embodiments of this application are configured to perform any data transmission method provided in the foregoing method embodiments, and therefore can achieve a same effect as the foregoing implementation method. When an integrated unit is used, the terminal device or the network device may include a processing module, a storage module, and a communication module. The processing module may be configured to control and manage an action of the terminal device or the network device. For example, the processing unit may be configured to support the terminal device or the network device in performing a step performed by the processing unit. The storage module may be configured to support storage of program code, data, and the like. The communication module may be configured to support the terminal device or the network device in communicating with another device.

The processing module may be a processor or a controller. The processing module may implement or execute various example logical blocks, modules, and circuits described with reference to the content disclosed in this application. The processor may alternatively be a combination for implementing a computing function, for example, a combination including one or more microprocessors or a combination of digital signal processing (digital signal processing, DSP) and a microprocessor. The storage module may be a memory. The communication module may be specifically a device, for example, a radio frequency circuit, a Bluetooth chip, or a Wi-Fi chip, that interacts with another electronic device.

For example, FIG. 14 is a block diagram of a communication apparatus 1400 according to an embodiment of this application. The communication apparatus 1400 may correspond to the terminal device described in the method 500 and the method 900, or may be a chip or a component used in the terminal device. In addition, modules or units in the communication apparatus 1400 are respectively configured to perform actions or processing processes performed by the terminal device in the method 500 or the method 900.

As shown in FIG. 14, the communication apparatus 1400 includes a processing module 1410 and an interface module 1420. The interface module 1420 is configured to perform specific signal receiving and sending under driving of the processing module 1410.

The processing module 1410 is configured to control, on a first time-frequency resource of a first space division resource based on a first transmission parameter, the communication apparatus 1400 to receive first data.

The processing module 1410 is further configured to: control, on a second time-frequency resource of the first space division resource based on a second transmission parameter, the communication apparatus 1400 to receive second data, or skip receiving data on the second time-frequency resource of the first space division resource, where the first time-frequency resource and the second time-frequency resource do not overlap, the first transmission parameter includes a first modulation and coding scheme MCS, a first redundancy version RV, and a first new data indicator NDI, and the second transmission parameter includes a second MCS, a second RV, and a second NDI.

According to the communication apparatus provided in this embodiment of this application, the first data (the first data may be, for example, video data) is received on a part of resources on one layer of space division resources (for example, the first space division resource), and the second data (the second data may be, for example, haptic data) is received on the other part of resources on the layer of space division resources, or the second data is received on another layer of space division resources (for example, a second space division resource). Two sets of different MCSs, NDIs, and RVs are respectively used for receiving the first data and the second data, and the first space division resource and the second space division resource correspond to a same time-frequency resource. According to this solution, transmission of the video data and the haptic data can be efficiently and simultaneously implemented. This ensures high requirements of the haptic data on reliability and a delay, and meets a high requirement of the video data on a rate, improving communication efficiency.

In some possible implementations, the first space division resource is each of M space division resources, and M is a positive integer.

In some possible implementations, the first space division resource is L space division resources in M space division resources, M is a positive integer greater than 1, and L is a positive integer less than M.

In some possible implementations, the interface module 1420 is configured to receive first configuration information and receive first indication information, where the first indication information indicates a third time-frequency resource on the first space division resource, and the first configuration information is used to configure the first time-frequency resource and the second time-frequency resource in the third time-frequency resource.

In some possible implementations, the first configuration information is used to configure at least one of the following: a proportion of the first time-frequency resource in the third time-frequency resource; or a proportion of the second time-frequency resource in the third time-frequency resource.

In some possible implementations, the interface module 1420 is configured to receive second indication information, where the second indication information indicates the first time-frequency resource and the second time-frequency resource.

In some possible implementations, the second indication information includes a second MCS field, a first part of the second MCS field indicates the second MCS, and a second part of the second MCS field indicates the first time-frequency resource and the second time-frequency resource.

In some possible implementations, the second indication information includes a second MCS field and a second RV field, a first part of the second MCS field indicates the second MCS, a second part of the second MCS field and a first part of the second RV field indicate the first time-frequency resource and the second time-frequency resource, and a second part of the second RV field indicates the second RV.

Further, the communication apparatus 1400 may further include a storage module (unit), and the interface module (unit) 1420 may be a transceiver, an input/output interface, or an interface circuit. The storage unit is configured to store instructions executed by the interface module 1420 and the processing module 1410. The processing module 1410, the interface module 1420, and the storage unit are coupled to each other. The storage unit stores the instructions. The processing module 1410 is configured to execute the instructions stored in the storage unit. The interface module 1420 is configured to perform specific signal receiving and sending under driving of the processing module 1410.

It should be understood that, for a specific process in which the units in the communication apparatus 1400 perform the corresponding steps, refer to the foregoing descriptions related to the terminal device with reference to related embodiments in the method 500, the method 900, FIG. 5, and FIG. 9. For brevity, details are not described herein again.

It should be understood that the interface module 1420 may be the transceiver, the input/output interface, or the interface circuit. The storage unit may be a memory. The processing module 1410 may be implemented by a processor. As shown in FIG. 15, a communication apparatus 1500 may include a processor 1510, a memory 1520, a transceiver 1530, and a bus system 1540. Components of the communication apparatus 1500 are coupled together by using the bus system 1540. In addition to a data bus, the bus system 1540 may further include a power bus, a control bus, a status signal bus, and the like. However, for clear description, various buses are marked as the bus system 1540 in FIG. 15. For ease of illustration, the bus system 1504 is merely schematically drawn in FIG. 15.

The communication apparatus 1400 shown in FIG. 14 or the communication apparatus 1500 shown in FIG. 15 can implement the steps performed by the terminal device in the embodiments of the method 500 or the method 900. For similar descriptions, refer to the descriptions in the foregoing corresponding methods. To avoid repetition, details are not described herein again.

It should be further understood that the communication apparatus 1400 shown in FIG. 14 or the communication apparatus 1500 shown in FIG. 15 may be a terminal device, or the terminal device may include the communication apparatus 1400 shown in FIG. 14 or the communication apparatus 1500 shown in FIG. 15.

It should be further understood that the terminal device in this application may alternatively be a chip, a chip system, a processor, or the like that supports the terminal device in implementing the method. This is not limited in embodiments of this application.

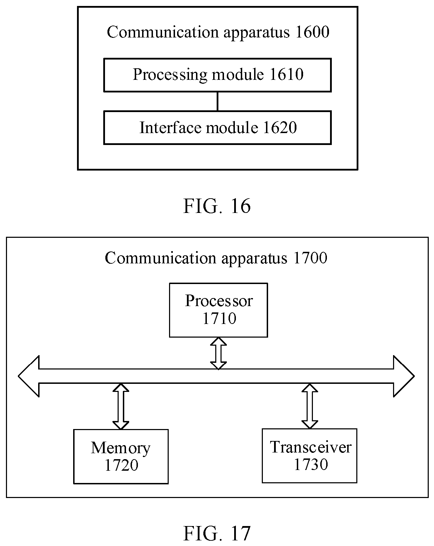

FIG. 16 is a block diagram of a communication apparatus 1600 according to an embodiment of this application. The communication apparatus 1600 may correspond to the network device described in the method 500 or the method 900, or may be a chip or a component used in the network device. In addition, modules or units in the communication apparatus 1600 are respectively configured to perform actions or processing processes performed by the network device in the method 500 or the method 900.

As shown in FIG. 16, the communication apparatus 1600 may include a processing module 1610 and an interface module 1620. The interface module 1620 is configured to perform specific signal receiving and sending under driving of the processing module 1610.

The processing module 1610 is configured to control, on a first time-frequency resource of a first space division resource based on a first transmission parameter, the communication apparatus 1600 to send first data.

The processing module 1610 is further configured to: control, on a second time-frequency resource of the first space division resource based on a second transmission parameter, the communication apparatus 1600 to send second data, or skip sending data on the second time-frequency resource of the first space division resource, where the first time-frequency resource and the second time-frequency resource do not overlap, the first transmission parameter includes a first modulation and coding scheme MCS, a first redundancy version RV, and a first new data indicator NDI, and the second transmission parameter includes a second MCS, a second RV, and a second NDI.

According to the communication apparatus provided in this embodiment of this application, the first data (the first data may be, for example, video data) is received on a part of resources on one layer of space division resources (for example, the first space division resource), and the second data (the second data may be, for example, haptic data) is received on the other part of resources on the layer of space division resources, or the second data is received on another layer of space division resources (for example, a second space division resource). Two sets of different MCSs, NDIs, and RVs are respectively used for receiving the first data and the second data, and the first space division resource and the second space division resource correspond to a same time-frequency resource. According to this solution, transmission of the video data and the haptic data can be efficiently and simultaneously implemented. This ensures high requirements of the haptic data on reliability and a delay, and meets a high requirement of the video data on a rate, improving communication efficiency.

In some possible implementations, the first space division resource is each of M space division resources, and M is a positive integer.

In some possible implementations, the first space division resource is L space division resources in M space division resources, M is a positive integer greater than 1, and L is a positive integer less than M.

In some possible implementations, the interface module 1620 is configured to send first configuration information and send first indication information, where the first indication information indicates a third time-frequency resource on the first space division resource, and the first configuration information is used to configure the first time-frequency resource and the second time-frequency resource in the third time-frequency resource.

In some possible implementations, the first configuration information is used to configure at least one of the following: a proportion of the first time-frequency resource in the third time-frequency resource; or a proportion of the second time-frequency resource in the third time-frequency resource.

In some possible implementations, the interface module 1620 is configured to send second indication information, where the second indication information indicates the first time-frequency resource and the second time-frequency resource.

In some possible implementations, the second indication information includes a second MCS field, a first part of the second MCS field indicates the second MCS, and a second part of the second MCS field indicates the first time-frequency resource and the second time-frequency resource.

In some possible implementations, the second indication information includes a second MCS field and a second RV field, a first part of the second MCS field indicates the second MCS, a second part of the second MCS field and a first part of the second RV field indicate the first time-frequency resource and the second time-frequency resource, and a second part of the second RV field indicates the second RV.

It should be understood that, for a specific process in which the units in the communication apparatus 1600 perform the corresponding steps, refer to the foregoing descriptions related to the network device with reference to related embodiments in the method 500 and the method 900. For brevity, details are not described herein again.

Optionally, the interface module 1620 may include a receiving unit (module) and a sending unit (module), configured to perform steps of receiving information and sending information by the network device in embodiments of the method 500 or the method 900.

Further, the communication apparatus 1600 may further include a storage unit. The interface module 1620 may be a transceiver, an input/output interface, or an interface circuit. The storage unit is configured to store instructions executed by the interface module 1620 and the processing module 1610. The interface module 1620, the processing module 1610, and the storage unit are coupled to each other. The storage unit stores the instructions. The processing module 1610 is configured to execute the instructions stored in the storage unit. The interface module 1620 is configured to perform specific signal receiving and sending under driving of the processing module 1610.

It should be understood that the interface module 1620 may be the transceiver, the input/output interface, or the interface circuit. The storage unit may be a memory. The processing module 1610 may be implemented by a processor. As shown in FIG. 17, a communication apparatus 1700 may include a processor 1710, a memory 1720, and a transceiver 1730.

The communication apparatus 1600 shown in FIG. 16 or the communication apparatus 1700 shown in FIG. 17 can implement the steps performed by the network device in the embodiments of the method 500 or the method 900. For similar descriptions, refer to the descriptions in the foregoing corresponding methods. To avoid repetition, details are not described herein again.

It should be further understood that the communication apparatus 1600 shown in FIG. 16 or the communication apparatus 1700 shown in FIG. 17 may be a network device, or the network device may include the communication apparatus 1600 shown in FIG. 16 or the communication apparatus 1700 shown in FIG. 17.

It should be further understood that the network device in this application may alternatively be a chip, a chip system, or a processor that supports the network device in implementing the method, or may be a logical node, a logical module, or software that can implement all or some functions of the network device.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor and may be an integrated circuit having a signal processing capability. In an implementation process, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor for example, a central processing unit (central processing unit, CPU) or another processor that may invoke the program. For still another example, the units may be integrated and implemented in a form of a system-on-a-chip (system-on-a-chip, SoC).

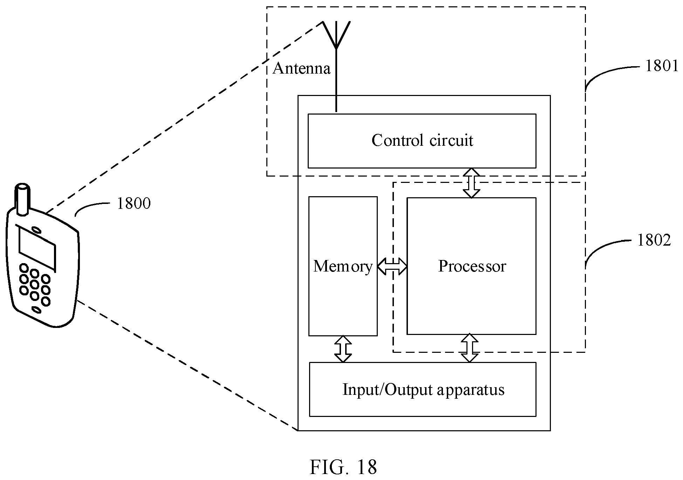

FIG. 18 is a diagram of a structure of a terminal device 1800 according to this application. The foregoing communication apparatus 1400 or communication apparatus 1500 may be configured in the terminal device 1800. Alternatively, the communication apparatus 1400 or the communication apparatus 1500 may be the terminal device 1800. In other words, the terminal device 1800 may perform actions performed by the terminal device in the method 500 or the method 900. Optionally, for ease of description, FIG. 18 shows only main components of the terminal device. As shown in FIG. 18, the terminal device 1800 includes a processor a memory, a control circuit, an antenna, and an input/output apparatus.

The processor is mainly configured to: process a communication protocol and communication data; control an entire terminal device; execute a software program; and process data of the software program. For example, the processor is configured to support the terminal device in performing an action described in the foregoing data transmission method embodiments. The memory is mainly configured to store the software program and the data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, for example, a touchscreen, a display, or a keyboard, is mainly configured to receive data input by a user and output data to the user.

After the terminal device is powered on, the processor may read the software program in the storage unit, interpret and execute instructions of the software program, and process the data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends the radio frequency signal in a form of an electromagnetic wave form through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 18 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. Functions of the baseband processor and the central processing unit are integrated into the processor in FIG. 18. A person skilled in the art may understand that the baseband processor and the central processing unit each may alternatively be independent processors, and are interconnected by using a technology like a bus. A person skilled in the art may understand that the terminal device may include a plurality of baseband processors to adapt to different network standards, the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor or may be stored in the storage unit in a form of a software program, and the processor executes the software program to implement a baseband processing function.

For example, in embodiments of this application, the antenna having a transceiver function and the control circuit may be considered as a transceiver unit 1801 of the terminal device 1800, and the processor having a processing function may be considered as a processing unit 1802 of the terminal device 1800. As shown in FIG. 18, the terminal device 1800 includes the transceiver unit 1801 and the processing unit 1802. The transceiver unit may also be referred to as a transceiver, a transceiver machine, a transceiver apparatus, or the like. Optionally, a component that is in the transceiver unit 1801 and that is configured to implement a receiving function may be considered as a receiving unit, and a component that is in the transceiver unit 1801 and that is configured to implement a sending function may be considered as a sending unit. In other words, the transceiver unit 1801 includes the receiving unit and the sending unit. For example, the receiving unit may also be referred to as a receiver, a receiver machine, or a receiving circuit, and the sending unit may also be referred to as a transmitter, a transmitter machine, or a transmitting circuit.

It should be understood that, the processor in embodiments of this application may be a central processing unit (central processing unit, CPU), or the processor may be another general-purpose processor a digital signal processor (digital signal processor DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or the processor may be any conventional processor, or the like.

It should be further understood that the memory in embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used for implementation, all or some of the foregoing embodiments may be implemented in a form of a computer program product. The computer program product includes one or more computer instructions or computer programs. When the computer instructions or the computer programs are loaded or executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by the computer, or a data storage device like a server or a data center, including one or more usable media. The usable medium may be a magnetic medium (for example, a floppy disk, a hard disk, or a magnetic tape), an optical medium (for example, a DVD), or a semiconductor medium. The semiconductor medium may be a solid state drive.

An embodiment of this application further provides a communication system. The communication system includes the foregoing terminal device and the foregoing network device.

An embodiment of this application further provides a computer-readable medium, configured to store computer program code. The computer program includes instructions used to perform the data transmission method in embodiments of this application in the method 500 or the method 900. The readable medium may be a read-only memory (read-only memory, ROM) or a random access memory (random access memory, RAM). This is not limited in embodiments of this application.

This application further provides a computer program product. The computer program product includes instructions. When the instructions are executed, a terminal device is enabled to perform an operation of the terminal device corresponding to the foregoing method, or a network device is enabled to perform an operation of the network device corresponding to the foregoing method.

An embodiment of this application further provides a system chip. The system chip includes a processing unit and a communication unit. The processing unit may be, for example, a processor and the communication unit may be, for example, an input/output interface, a pin, a circuit, or the like. The processing unit may execute computer instructions, so that a chip in the communication apparatus performs any data transmission method provided in the foregoing embodiments of this application.

Optionally, any communication apparatus provided in embodiments of this application may include the system chip.

Optionally, the computer instructions are stored in a storage unit.

Optionally, the storage unit is a storage unit in the chip, for example, a register or a cache. Alternatively, the storage unit may be a storage unit that is in a terminal and that is located outside the chip, for example, a ROM or another type of static storage device that can store static information and instructions, or a RAM. The processor described above may be a CPU, a microprocessor an ASIC, or one or more integrated circuits configured to control execution of a program for the foregoing master system information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to a same device.

It may be understood that the memory in embodiments of this application may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The terms "uplink" and "downlink" in this application are used to describe a data/information transmission direction in a specific scenario. For example, an "uplink" direction is usually a direction in which data/information is transmitted from a terminal to a network side, or a direction in which data/information is transmitted from a distributed unit to a central unit; and a "downlink" direction is usually a direction in which data/information is transmitted from a network side to a terminal, or a direction in which data/information is transmitted from a central unit to a distributed unit. It may be understood that "uplink" and "downlink" are merely used to describe the data/information transmission direction, without limiting a specific starting or ending device of data/information transmission.

In this application, names may be assigned to various objects such as messages/ information/devices/network
elements/systems/apparatuses/actions/operations/procedures/concepts. It may be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

A person of ordinary skill in the art may be aware that all or some of the methods in embodiments of this application may be implemented by using software, hardware, firmware, or any combination thereof. When software is used for implementation, all or some of the embodiments may be implemented in a form of a computer program product. The computer program product includes one or more computer programs or instructions. When the computer programs or the instructions are loaded and executed on a computer, all or some of the procedures or functions in embodiments of this application are performed. The computer may be a general-purpose computer, a dedicated computer, a computer network, or another programmable apparatus. The computer programs or the instructions may be stored in a computer-readable storage medium, or may be transmitted by using a computer-readable storage medium. The computer-readable storage medium may be any usable medium accessible by the computer, or a data storage device like a server, integrating one or more usable media.

It may be clearly understood by a person skilled in the art that, for the purpose of convenient and brief description, for specific working processes of the foregoing systems, apparatuses, and units, refer to corresponding processes in the foregoing method embodiments. Details are not described herein again.

In several embodiments provided in this application, it should be understood that the disclosed systems, apparatuses, and methods may be implemented in other manners. For example, the described apparatus embodiments are merely examples. For example, division into the foregoing units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and parts displayed as units may or may not be physical units, in other words, may be located in one position, or may be distributed on a plurality of network units. Some or all of the units may be selected based on an actual requirement to achieve the objectives of the solutions in the embodiments.

In addition, functional units in embodiments of this application may be integrated into one processing unit, each unit may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, the part contributing to a conventional technology, or some of the technical solutions may be implemented in a form of a software product. The computer software product is stored in a storage medium, and includes several instructions for indicating a computer device (which may be a personal computer, a server, or a network device) to perform all or some of the steps of the methods described in embodiments of this application. The storage medium includes a USB flash drive, a removable hard disk, a read-only memory (read-only memory, ROM), or random access.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method comprises:
receiving or sending first data on a first time-frequency resource of a first space division resource based on a first transmission parameter; and
receiving or sending second data on a second time-frequency resource of the first space division resource based on a second transmission parameter, or skipping sending or receiving data on the second time-frequency resource of the first space division resource, wherein the first time-frequency resource and the second time-frequency resource do not overlap, wherein
the first transmission parameter comprises a first modulation and coding scheme MCS, a first redundancy version RV, and a first new data indicator NDI, and the second transmission parameter comprises a second MCS, a second RV, and a second NDI.

2. The method according to claim 1, wherein the first space division resource is each of M space division resources, and M is a positive integer.

3. The method according to claim 1, wherein the first space division resource is L space division resources in M space division resources, M is a positive integer greater than 1, and L is a positive integer less than M.

4. The method according to any one of claims 1 to 3, wherein the method further comprises:
receiving first configuration information and receiving first indication information, wherein the first indication information indicates a third time-frequency resource on the first space division resource, and the first configuration information is used to configure the first time-frequency resource and the second time-frequency resource in the third time-frequency resource.

5. The method according to any one of claims 1 to 3, wherein the method further comprises:
sending first configuration information and sending first indication information, wherein the first indication information indicates a third time-frequency resource on the first space division resource, and the first configuration information is used to configure the first time-frequency resource and the second time-frequency resource in the third time-frequency resource.

6. The method according to claim 4 or 5, wherein the first configuration information is used to configure at least one of the following:
a proportion of the first time-frequency resource in the third time-frequency resource; or
a proportion of the second time-frequency resource in the third time-frequency resource.

7. The method according to any one of claims 1 to 3, wherein the method further comprises:
receiving or sending second indication information, wherein the second indication information indicates the first time-frequency resource and the second time-frequency resource.

8. The method according to claim 7, wherein the second indication information comprises a second MCS field, a first part of the second MCS field indicates the second MCS, and a second part of the second MCS field indicates the first time-frequency resource and the second time-frequency resource.

9. The method according to claim 7, wherein the second indication information comprises a second MCS field and a second RV field, a first part of the second MCS field indicates the second MCS, a second part of the second MCS field and a first part of the second RV field indicate the first time-frequency resource and the second time-frequency resource, and a second part of the second RV field indicates the second RV.

10. A communication apparatus, wherein the communication apparatus comprises a processing module, wherein
the processing module is configured to control, on a first time-frequency resource of a first space division resource based on a first transmission parameter, the communication apparatus to receive or send first data; and
the processing module is further configured to: control, on a second time-frequency resource of the first space division resource based on a second transmission parameter, the communication apparatus to receive or send second data, or skip sending or receiving data on the second time-frequency resource of the first space division resource, wherein the first time-frequency resource and the second time-frequency resource do not overlap, wherein
the first transmission parameter comprises a first modulation and coding scheme MCS, a first redundancy version RV, and a first new data indicator NDI, and the second transmission parameter comprises a second MCS, a second RV, and a second NDI.

11. The communication apparatus according to claim 10, wherein the first space division resource is each of M space division resources, and M is a positive integer.

12. The communication apparatus according to claim 10, wherein the first space division resource is L space division resources in M space division resources, M is a positive integer greater than 1, and L is a positive integer less than M.

13. The communication apparatus according to any one of claims 10 to 12, wherein the communication apparatus further comprises an interface module, and the interface module is configured to:
receive first configuration information and receive first indication information, wherein the first indication information indicates a third time-frequency resource on the first space division resource, and the first configuration information is used to configure the first time-frequency resource and the second time-frequency resource in the third time-frequency resource.

14. The communication apparatus according to any one of claims 10 to 12, wherein the communication apparatus further comprises an interface module, and the interface module is configured to:
send first configuration information and send first indication information, wherein the first indication information indicates a third time-frequency resource on the first space division resource, and the first configuration information is used to configure the first time-frequency resource and the second time-frequency resource in the third time-frequency resource.

15. The communication apparatus according to claim 13 or 14, wherein the first configuration information is used to configure at least one of the following:
a proportion of the first time-frequency resource in the third time-frequency resource; or
a proportion of the second time-frequency resource in the third time-frequency resource.

16. The communication apparatus according to any one of claims 10 to 12, wherein the communication apparatus further comprises an interface module, and the interface module is configured to:
receive or send second indication information, wherein the second indication information indicates the first time-frequency resource and the second time-frequency resource.

17. The communication apparatus according to claim 16, wherein the second indication information comprises a second MCS field, a first part of the second MCS field indicates the second MCS, and a second part of the second MCS field indicates the first time-frequency resource and the second time-frequency resource.

18. The communication apparatus according to claim 17, wherein the second indication information comprises a second MCS field and a second RV field, a first part of the second MCS field indicates the second MCS, a second part of the second MCS field and a first part of the second RV field indicate the first time-frequency resource and the second time-frequency resource, and a second part of the second RV field indicates the second RV.

19. A communication apparatus, comprising a processor, wherein the processor is coupled to a memory, the memory is configured to store a program or instructions, and when the program or the instructions are executed by the processor, the apparatus is enabled to perform the method according to any one of claims 1 to 9.

20. A computer-readable storage medium, wherein the computer-readable storage medium stores a computer program or instructions, and when the computer program or the instructions are read and executed by a computer, the computer is enabled to perform the method according to any one of claims 1 to 9.

21. A computer program product, comprising a computer program, wherein when the computer program is executed by a processor, the method according to any one of claims 1 to 9 is performed.

22. A communication apparatus, comprising a module configured to perform the method according to any one of claims 1 to 9.

23. A communication system, comprising a terminal device and a network device that are configured to perform the method according to any one of claims 1 to 9.
